# EUROPEAN PATENT APPLICATION

(11) **EP 4 773 318 A1**
(43) Date of publication of application: **08.07.2026**
(21) Application number: 23952072.9
(22) Date of filing: 04.12.2023
(51) Int. Cl.: H01M 10/0587, H01M 10/0525, H01M 50/531

(54) **BATTERY CELL, BATTERY, AND ELECTRICAL DEVICE**

(30) Priority: 14.09.2023 CN 202311186331
(71) Applicant: Contemporary Amperex Technology Co., Limited, Ningde, Fujian 352100 (CN)
(72) Inventor: XU, Hu, Ningde, Fujian 352100 (CN); REN, Miaomiao, Ningde, Fujian 352100 (CN); DONG, Jiao, Ningde, Fujian 352100 (CN); GUO, Jipeng, Ningde, Fujian 352100 (CN); YANG, Rui, Ningde, Fujian 352100 (CN)
(74) Representative: Ziebig Hengelhaupt Intellectual Property Attorneys Patentanwaltskanzlei PartGmbB
(86) International application number: PCT/CN2023/136230
(87) International publication number: WO 2025/055149

(57) **Abstract**

The present application discloses a battery cell, a battery, and an electrical device. The battery cell comprises a casing, an electrode terminal, an electrode assembly, and a first insulating member. The casing has a first wall and a second wall, and the second wall surrounds the edge of the first wall. The electrode terminal is mounted on the first wall in an insulating manner. The electrode assembly is accommodated in the casing. The electrode assembly comprises a main body portion, a first tab and a second tab, and the first tab and the second tab have opposite polarities. In a thickness direction of the first wall, the main body portion has a first end surface close to the first wall, and the first tab and the second tab are both provided on the first end surface. The first tab is electrically connected to the electrode terminal, and the second tab is electrically connected to the casing. The first insulating member is provided on the outer peripheral surface of the main body portion, and a portion of the first insulating member is located between the first tab and the second wall, so that the first tab and the second wall are insulated and isolated from each other. The technical solution provided in the present application can improve the reliability of the battery.

## Description

### CROSS-REFERENCE TO RELATED APPLICATIONS

The present application claims priority to the Chinese Patent Application No. 202311186331.4 filed on September 14, 2022 and entitled "BATTERY CELL, BATTERY, AND ELECTRIC APPARATUS", which is incorporated herein by reference in its entirety.

### TECHNICAL FIELD

The present application relates to the field of battery technologies, and in particular, to a battery cell, a battery, and an electric apparatus.

### BACKGROUND

Energy conservation and emission reduction are crucial to the sustainable development of the automobile industry. Electric vehicles, with their advantages in energy conservation and emission reduction, have become an important part of the sustainable development of the automobile industry. For electric vehicles, battery technologies are an important factor in connection with their development.

In the development of battery technology, how to improve the reliability of the battery is an urgent technical problem that needs to be solved in the battery technology.

### SUMMARY

The present application provides a battery cell, a battery, and an electric apparatus. The technical solution provided in the present application can improve the reliability of the battery.

The present application is implemented using the following technical solutions:

According to a first aspect, the present application provides a battery cell, including a housing, an electrode terminal, an electrode assembly, and a first insulating member. The housing has a first wall and a second wall, where the second wall surrounds an edge of the first wall. The electrode terminal is mounted on the first wall in an insulating manner. The electrode assembly is accommodated in the housing, and the electrode assembly includes a main body portion, a first tab, and a second tab, where the first tab and the second tab have opposite polarities, along a thickness direction of the first wall, the main body portion has a first end surface close to the first wall, the first tab and the second tab are both provided on the first end surface, the first tab is electrically connected to the electrode terminal, and the second tab is electrically connected to the housing. The first insulating member is provided on an outer peripheral surface of the main body portion, and a portion of the first insulating member is located between the first tab and the second wall to insulate and isolate the first tab and the second wall from each other.

In the above technical solution, the first tab and the second tab of the electrode assembly are both provided on the same end surface (that is, the first end surface) of the main body portion, which is conducive to saving the space occupied by the electrode assembly in the thickness direction of the first wall, so as to increase the energy density of the battery cell having such an electrode assembly. The battery cell further includes a first insulating member, where a portion of the first insulating member is located between the first tab and the second wall of the housing, so as to insulate and isolate the first tab from the second wall, thereby mitigating the risk of an internal short circuit in battery cell caused by the first tab lapping against the second wall (that is, the housing of the battery), and thus the battery has higher reliability.

According to some embodiments of the present application, along a circumferential direction of the main body portion, a central angle corresponding to the first insulating member is α1, and α1 < 360°.

In the above technical solution, the central angle corresponding to the first insulating member is set as α1 to be less than 360°, that is, the first insulating member does not need to wrap fully around the entire outer periphery of the main body portion. Under the condition that the first insulating member insulates and isolates the first tab from the second wall, the amount of material used for the first insulating member is reduced, achieving the effect of saving the manufacturing cost of the battery cell, and thus reducing the manufacturing cost of the battery.

According to some embodiments of the present application, along the circumferential direction of the main body portion, the central angle corresponding to the first insulating member is α1, and a central angle corresponding to the first tab is α2, satisfying α1 > α2.

In the above technical solution, the central angle α1 corresponding to the first insulating member is set to be greater than the central angle α2 corresponding to the first tab, so that the first insulating member can effectively insulate and isolate the first tab from the second wall, increasing the creepage distance between the first tab and the second wall, thereby mitigating the risk of an internal short circuit in the battery cell, and thus the battery has higher reliability.

According to some embodiments of the present application, along the circumferential direction of the main body portion, the central angle corresponding to the first insulating member is α1, and a central angle corresponding to the second tab is α3, satisfying α1 + α3 < 360°.

In the above technical solution, the sum of the central angle α1 corresponding to the first insulating member and the central angle α2 corresponding to the second tab is limited to be less than 360°, so that the amount of material used for the first insulating member is reduced under the condition that the first insulating member insulates and isolates the first tab from the second wall, thereby achieving the purpose of saving the manufacturing cost of the battery cell, and thus reducing the manufacturing cost of the battery.

According to some embodiments of the present application, along the circumferential direction of the main body portion, the first insulating member does not surround the second tab.

In the above technical solution, along the circumferential direction of the main body portion, the first insulating member does not surround the second tab, so that the first insulating member can be provided without corresponding to the second tab under the condition of effectively insulating and isolating the first tab from the second wall, that is, the second tab does not need to be provided between the second tab and the second wall, thereby effectively reducing the amount of material used for the first insulating member, and thus reducing the manufacturing cost of the battery.

According to some embodiments of the present application, the battery cell further includes a first adapting member and a second insulating member. The first adapting member connects the first tab to the electrode terminal. The second insulating member is provided between the first adapting member and the housing to insulate and isolate the first adapting member from the housing.

In the above technical solution, the first adapting member connects the first tab to the electrode terminal, so that the connection difficulty between the first tab and the electrode terminal can be reduced, and the manufacturing efficiency of the battery cell can be improved. A second insulating member is provided between the first adapting member and the housing, so as to insulate and isolate the first adapting member from the housing, increasing the creepage distance between the first adapting member and the housing, thereby mitigating the risk of an internal short circuit in the battery cell, and the battery has higher reliability.

According to some embodiments of the present application, the first insulating member is connected to the main body portion and the second insulating member.

In the above technical solution, the first insulating member is set to be connected to the main body portion and the second insulating member, so that the first insulating member can be stably located on the outer peripheral surface of the main body portion, thereby effectively insulating and isolating the first tab from the second wall, mitigating the risk of an internal short circuit in the battery cell caused by the first tab lapping against the housing, and thus the battery has higher reliability.

According to some embodiments of the present application, along the thickness direction of the first wall, the second insulating member has a first surface facing the electrode assembly, the first surface is connected to the first tab, and along a direction from the main body portion toward the first wall, the first insulating member extends beyond the first surface.

In the above technical solution, the first insulating member is set to extend beyond the first surface, the creepage distance between the first tab and the second wall can be effectively increased, the risk of the first tab lapping against the second wall can be effectively mitigated, thereby mitigating the risk of an internal short circuit in the battery cell, and thus the battery has higher reliability.

According to some embodiments of the present application, along the direction from the main body portion toward the first wall, a dimension by which the first insulating member extends beyond the first surface is h1, satisfying h1 ≥ 0.5 mm.

In the above technical solution, the dimension h1 by which the first insulating member extends beyond the first surface is set to be greater than or equal to 0.5 mm, so that the first insulating member can effectively cover the first tab in the direction from the main body portion toward the first wall, effectively increasing the creepage distance between the first tab and the second wall, effectively mitigating the risk of the first tab lapping against the second wall, thereby mitigating the risk of an internal short circuit in the battery cell, and thus the battery has higher reliability.

According to some embodiments of the present application, h1 ≥ 1.5 mm is satisfied.

In the above technical solution, the dimension h1 by which the first insulating member extends beyond the first surface is set to be greater than or equal to 1.5 mm, on one hand, a secure connection between the first insulating member and the second insulating member can be achieved; on the other hand, the first insulating member can effectively cover the first tab in the direction from the main body portion toward the first wall, effectively increasing the creepage distance between the first tab and the second wall, effectively mitigating the risk of the first tab lapping against the second wall, thereby mitigating the risk of an internal short circuit in the battery cell, and thus the battery has higher reliability.

According to some embodiments of the present application, along a direction from the first wall toward the main body portion, the first insulating member extends beyond the first end surface.

In the above technical solution, the insulating member is set to extend beyond the first end surface, the creepage distance between the first tab and the second wall can be effectively increased, the risk of the first tab lapping against the second wall can be effectively mitigated, thereby mitigating the risk of an internal short circuit in the battery cell, and thus the battery has higher reliability.

According to some embodiments of the present application, along the direction from the first wall toward the main body portion, a dimension by which the first insulating member extends beyond the first end surface is h2, satisfying h2 ≥ 0.5 mm.

In the above technical solution, the dimension h2 by which the first insulating member extends beyond the first end surface is set to be greater than or equal to 0.5 mm, so that the first insulating member can effectively cover the first tab in the direction from the first wall toward the main body portion, effectively increasing the creepage distance between the first tab and the second wall, effectively mitigating the risk of the first tab lapping against the second wall, thereby mitigating the risk of an internal short circuit in the battery cell, and thus the battery has higher reliability.

According to some embodiments of the present application, h2 ≥ 1.5 mm is satisfied.

In the above technical solution, the dimension h2 by which the first insulating member extends beyond the first end surface is set to be greater than or equal to 1.5 mm, on one hand, a secure connection between the first insulating member and the main body portion can be achieved; on the other hand, the first insulating member can effectively cover the first tab in the direction from the first wall toward the main body portion, effectively increasing the creepage distance between the first tab and the second wall, effectively mitigating the risk of the first tab lapping against the second wall, thereby mitigating the risk of an internal short circuit in the battery cell, and thus the battery has higher reliability.

According to some embodiments of the present application, a thickness of the first insulating member is T, satisfying T ≥ 30 µm.

In the above technical solution, the thickness T of the first insulating member is set to be greater than or equal to 30 µm, the risk of the first insulating member cracking or being pierced can be mitigated, the insulating and isolating effect of the first insulating member can be improved, and the risk of an internal short circuit in the battery cell caused by the first tab lapping against the second wall can be mitigated, so that the battery has higher reliability.

According to some embodiments of the present application, the electrode assembly is a wound electrode assembly, the first tab includes a plurality of first sub-tabs, and each first sub-tab has the same dimension in a winding direction of the electrode assembly; or, along a direction from an inner ring to an outer ring of the electrode assembly, dimensions of the plurality of first sub-tabs in the winding direction of the electrode assembly gradually increase.

In the above technical solution, in some embodiments, the dimension of each first sub-tab in the winding direction of the electrode assembly is set to be the same, the processing difficulty (for example, when a tab is die-cut, the die-cutting dimension of each first sub-tab is the same, so the die-cutting efficiency is high) of the first sub-tab can be reduced, thereby improving the manufacturing efficiency of the battery. In some embodiments, along the direction from an inner ring to an outer ring of the electrode assembly, the dimensions of the plurality of first sub-tabs in the winding direction of the electrode assembly are set to gradually increase, so that the first tab can fully utilize the internal space of the housing, providing the first tab with a larger area to improve the current flow capacity between the first tab and the electrode terminal, and thus the battery has good charging and discharging performance.

According to some embodiments of the present application, the electrode assembly is a wound electrode assembly, the second tab includes a plurality of second sub-tabs, and each second sub-tab has the same dimension in a winding direction of the electrode assembly; or, along the direction from an inner ring to an outer ring of the electrode assembly, dimensions of the plurality of second sub-tabs in the winding direction of the electrode assembly gradually increase.

In the above technical solution, in some embodiments, the dimension of each second sub-tab in the winding direction of the electrode assembly is set to be the same, the processing difficulty (for example, when a tab is die-cut, the die-cutting dimension of each second sub-tab is the same, so the die-cutting efficiency is high) of the second sub-tab can be reduced, thereby improving the manufacturing efficiency of the battery. In some embodiments, along the direction from an inner ring to an outer ring of the electrode assembly, the dimensions of the plurality of second sub-tabs in the winding direction of the electrode assembly are set to gradually increase, so that the second tab can fully utilize the internal space of the housing, providing the second tab with a larger area to improve the current flow capacity between the second tab and the housing, and thus the battery has good charging and discharging performance.

According to some embodiments of the present application, the first tab has a second surface facing the first wall, and the second surface is fan-shaped.

In the above technical solution, the second surface of the first tab is set to be a fan-shaped structure, so that the first tab can fully utilize the internal space of the housing, providing the first tab with a larger area to improve the current flow capacity between the first tab and the electrode terminal, and thus the battery has good charging and discharging performance.

According to some embodiments of the present application, along the circumferential direction of the main body portion, the second surface has a first edge and a second edge that are distant from each other, an angle between the first edge and the second edge is β1, and 0 < β1 ≤ 270°.

In the above technical solution, the angle β1 formed between the first edge and the second edge of the first tab is set to be less than or equal to 270 degrees, the central angle of the second surface of the fan-shaped first tab is less than or equal to 270 degrees, so as to alleviate the phenomenon that the first tab is prone to lapping against the second tab due to the space occupied by the first tab being too large, and thus the battery has higher reliability.

According to some embodiments of the present application, the second tab has a third surface facing the first wall, and the third surface is fan-shaped.

In the above technical solution, the third surface of the second tab is set to be a fan-shaped structure, so that the second tab can fully utilize the internal space of the housing, providing the second tab with a larger area to improve the current flow capacity between the second tab and the housing, and thus the battery has good charging and discharging performance.

According to some embodiments of the present application, along the circumferential direction of the main body portion, the third surface has a third edge and a fourth edge that are distant from each other, an angle between the third edge and the fourth edge is β2, and 0 < β2 ≤ 180°.

In the above technical solution, the angle β2 formed between the third edge and the fourth edge of the second tab is set to be less than or equal to 180 degrees, the central angle of the third surface of the fan-shaped second tab is less than or equal to 180 degrees, so as to alleviate the phenomenon that the first tab and the second tab are prone to short circuit due to the space occupied by the second tab being too large, and thus the battery has higher reliability.

According to some embodiments of the present application, the electrode assembly includes a first electrode plate and a second electrode plate, and the electrode assembly is a wound electrode assembly. The first electrode plate includes a plurality of first sub-tabs, the plurality of first sub-tabs form the first tab, and the innermost n1 turns of the first electrode plate are not provided with the first sub-tabs, where n1 ≥ 1; and/or, the second electrode plate includes a plurality of second sub-tabs, the plurality of second sub-tabs form the second tab, and the innermost n2 turns of the second electrode plate are not provided with the second sub-tabs, where n2 ≥ 1.

In the above technical solution, the first sub-tab is not provided on the innermost n1 turns of the first electrode plates, the first tab and the second tab can be effectively spaced apart, thereby mitigating the risk of short circuit between the first tab and the second tab, which is conducive to improving the reliability of the battery. Similarly, the second sub-tab is not provided on the innermost n2 turns of the second electrode plates, the second tab and the first tab can be effectively spaced apart, thereby mitigating the risk of short circuit between the second tab and the first tab, which is conducive to improving the reliability of the battery.

According to some embodiments of the present application, the electrode assembly includes a first electrode plate and a second electrode plate, and the electrode assembly is a wound electrode assembly. The first electrode plate includes a plurality of first sub-tabs, the plurality of first sub-tabs form the first tab, and the outermost m1 turns of the first electrode plates are not provided with the first sub-tabs, where m1 ≥ 1; and/or, the second electrode plate includes a plurality of second sub-tabs, the plurality of second sub-tabs form the second tab, and the outermost m2 turns of the second electrode plates are not provided with the second sub-tabs, where m2 ≥ 1.

In the above technical solution, the first sub-tab is not provided on the outermost m1 turns of the first electrode plates, the first tab and the second wall can be effectively spaced apart, thereby mitigating the risk of short circuit between the first tab and the second wall, which is conducive to improving the reliability of the battery. The second sub-tab is not provided on the outermost m2 turns of the second electrode plate, the second tab and a first wall tab can be effectively spaced apart, thereby mitigating the risk of the second tab being damaged caused by mutual interference between the second tab and the second wall when the electrode assembly is placed into the housing, which is conducive to improving the reliability of the battery.

According to a second aspect, some embodiments of the present application further provide a battery, the battery including the battery cell provided in the first aspect.

According to a third aspect, some embodiments of the present application further provide an electric apparatus, the electric apparatus including the battery cell provided in the first aspect, where the battery cell is configured to supply electrical energy.

The foregoing descriptions are merely an overview of the technical solution of the present application. For a better understanding of the technical means in the present application such that they can be implemented according to the content of the specification, and to make the above and other objectives, features and advantages of the present application more obvious and easier to understand, the following describes specific embodiments of the present application.

### BRIEF DESCRIPTION OF DRAWINGS

To describe the technical solutions in embodiments of the present application more clearly, the following briefly describes the accompanying drawings required for describing some embodiments. It is appreciated that the accompanying drawings below show merely some embodiments of the present application and thus should not be considered as limitations on the scope. Persons of ordinary skill in the art may still derive other related drawings from the accompanying drawings without creative efforts.
FIG. 1 is a schematic structural diagram of a vehicle according to some embodiments of the present application;
FIG. 2 is a three-dimensional exploded view of a battery according to some embodiments of the present application;
FIG. 3 is a three-dimensional view of a battery cell according to some embodiments of the present application;
FIG. 4 is a three-dimensional exploded view of a battery cell according to some embodiments of the present application;
FIG. 5 is a schematic diagram of an electrode assembly and a first insulating member according to some embodiments of the present application;
FIG. 6 is a top view of an electrode assembly and a first insulating member according to some embodiments of the present application;
FIG. 7 is a top view of an electrode assembly and a first insulating member according to some embodiments of the present application;
FIG. 8 is a three-dimensional view of an electrode terminal, a first insulating member, and a second insulating member according to some embodiments of the present application;
FIG. 9 is a schematic diagram of an interior of a partial structure of a battery cell according to some embodiments of the present application;
FIG. 10 is a top view of an electrode assembly according to some other embodiments of the present application; and
FIG. 11 is a top view of an electrode assembly according to some other embodiments of the present application.

Reference signs: 100-battery; 10-battery cell; 11-housing; 110-first wall; 111-second wall; 112-electrode terminal; 113-bottom plate; 12-electrode assembly; 120-main body portion; 1200-first end surface; 121-first tab; 1210-first sub-tab; 1211-second surface; 12110-first edge; 12111-second edge; 122-second tab; 1220-second sub-tab; 1221-third surface; 12210-third edge; 12211-fourth edge; 123-central through hole; 13-first insulating member; 14-first adapting member; 15-second adapting member; 16-second insulating member; 160-first surface; 161-insulating member body; 162-separating strip; 17-insulating film; x-thickness direction of first wall; y-circumferential direction of main body portion; 20-box; 21-first box body; 22-second box body; 1000-vehicle; 200-controller; and 300-motor.

### DETAILED DESCRIPTION OF EMBODIMENTS

To make the objectives, technical solutions, and advantages of the embodiments of the present application clearer, the following clearly describes the technical solutions in the embodiments of the present application with reference to the accompanying drawings in the embodiments of the present application. Apparently, the described embodiments are some but not all of the embodiments of the present application. All other embodiments obtained by persons of ordinary skill in the art based on some embodiments of the present application without creative efforts shall fall within the protection scope of the present application.

Unless otherwise defined, all technical and scientific terms used in the present application shall have the same meanings as commonly understood by persons skilled in the art to which the present application relates. The terms used in the specification of the present application are intended to merely describe the specific embodiments rather than to limit the present application. The terms "include", "comprise", and any variations thereof in the specification, claims, and brief description of drawings of the present application are intended to cover non-exclusive inclusions. In the specification, claims, or accompanying drawings of the present application, the terms "first", "second", and the like are intended to distinguish between different objects rather than to indicate a particular sequence or relative importance.

In the present application, reference to "embodiment" means that specific features, structures, or characteristics described with reference to the embodiment may be incorporated in at least one embodiment of the present application. The word "embodiment" appearing in various places in the specification does not necessarily refer to the same embodiment or an independent or alternative embodiment that is exclusive of other embodiments.

In the description of the present application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in the present application as appropriate to specific situations.

The term "and/or" in the present application is only an associative relationship for describing associated objects, indicating that three relationships may be present. For example, A and/or B may indicate the following three cases: presence of only A; presence of both A and B; and presence of only B. In addition, the character "/" in the present application generally indicates an "or" relationship between the contextually associated objects.

In the embodiments of the present application, the same reference signs denote the same components, and for brevity, in different embodiments, detailed descriptions of the same components are not repeated. It should be understood that as shown in the accompanying drawings, sizes such as thickness, length, and width of various components and sizes such as thickness, length, and width of integrated devices in the embodiments of the present application are merely for illustrative purposes and should not constitute any limitations on the present application.

In the present application, "multiple" means more than two (inclusive).

In the embodiments of the present application, the battery cell may be a secondary battery, and the secondary battery refers to a battery cell that can be recharged to activate active materials for continuous use after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present application.

The battery cell generally includes an electrode assembly. The electrode assembly includes a positive electrode, a negative electrode, and a separator. During charging and discharging of the battery cell, active ions (for example, lithium ions) are intercalated and deintercalated between the positive electrode and the negative electrode. The separator is provided between the positive and negative electrodes, and can prevent short circuit between the positive and negative electrodes and allow active ions to pass through.

In some embodiments, the positive electrode may be a positive electrode plate, and the positive electrode plate may include a positive electrode current collector and a positive electrode active material provided on at least one surface of the positive electrode current collector.

In an example, the positive electrode current collector includes two back-to-back surfaces in a thickness direction of the positive electrode current collector, and the positive electrode active material is disposed on either or both of the two back-to-back surfaces of the positive electrode current collector.

In an example, the positive electrode current collector may be a metal foil current collector or a composite current collector. For example, as the metal foil, the positive electrode current collector may use aluminum with a silver-plated surface, stainless steel with a silver-plated surface, stainless steel, copper, aluminum, nickel, baked carbon, carbon, nickel, or titanium. The composite current collector may include a polymer material substrate and a metal layer. The composite current collector may be formed by forming a metal material (aluminum, aluminum alloy, nickel, nickel alloy, titanium, titanium alloy, silver, silver alloy, or the like) on the polymer material substrate (for example, substrates of polypropylene, polyethylene terephthalate, polybutylene terephthalate, polystyrene, and polyethylene).

In an example, the positive electrode active material may include at least one of the following materials: lithium-containing phosphate, lithium transition metal oxide, or respective modified compounds thereof. However, the present application is not limited to these materials, and may alternatively use other conventional materials that can be used as positive electrode active materials for batteries. One type of these positive electrode active materials may be used alone, or more than two of them may be used in combination. Examples of the lithium-containing phosphates may include but are not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), LiNi_{0.8}Co_{0.1}Mn_{0.1}O₂ (NCM811 for short)), lithium nickel cobalt aluminum oxide (for example, LiNi_{0.85}Co_{0.15}Al_{0.05}O₂), and modified compounds thereof.

In some embodiments, the positive electrode may adopt foam metal. The foam metal may be foam nickel, foam copper, foam aluminum, foam alloy, or foam carbon. When foam metal is used as the positive electrode, the surface of the foam metal may be not provided with a positive electrode active material; certainly, a positive electrode active material may also be provided. In an example, lithium source material, potassium metal or sodium metal may also be filled or/and deposited in the foam metal, and the lithium source material is lithium metal and/or lithium-rich material.

In some embodiments, the negative electrode may be a negative electrode plate, and the negative electrode plate may include a negative electrode current collector.

In an example, the negative electrode current collector may adopt a metal foil, foam metal, or composite current collector. For example, as the metal foil, the negative electrode current collector may use silver surface-treated aluminum or stainless steel, stainless steel, copper, aluminum, nickel, baked carbon, carbon, nickel, or titanium. The foam metal may be foam nickel, foam copper, foam aluminum, foam alloy, or foam carbon. The composite current collector may include a polymer material substrate and a metal layer. The composite current collector may be formed by forming a metal material (copper, copper alloy, nickel, nickel alloy, titanium, titanium alloy, silver, silver alloy, or the like) on the polymer material substrate (for example, substrates of polypropylene, polyethylene terephthalate, polybutylene terephthalate, polystyrene, and polyethylene).

In an example, the negative electrode plate may include a negative electrode current collector and a negative electrode active material provided on at least one surface of the negative electrode current collector.

In an example, the negative electrode current collector includes two back-to-back surfaces in a thickness direction of the negative electrode current collector, and the negative electrode active material is disposed on either or both of the two back-to-back surfaces of the negative electrode current collector.

In an example, the negative electrode active material may be a well-known negative electrode active material used for battery cells in the art. In an example, the negative electrode active material may include at least one of the following materials: artificial graphite, natural graphite, soft carbon, hard carbon, silicon-based material, tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, the present application is not limited to these materials, and may alternatively use other conventional materials that can be used as negative electrode active materials for batteries. One type of these negative electrode active materials may be used alone, or more than two of them may be used in combination.

In some embodiments, the material of the positive electrode current collector may be aluminum, and the material of the negative electrode current collector may be copper.

In some embodiments, the electrode assembly further includes a separator, and the separator is disposed between the positive electrode and the negative electrode.

In some embodiments, the separator is a separator film. The type of the separator film may be various, and may be any well-known porous separator film with good chemical stability and mechanical stability.

In an example, the material of the separator film may include at least one of glass fiber, non-woven fabric, polyethylene, polypropylene, and polyvinylidene fluoride. The separator film may be a single-layer film or a multi-layer composite film. When the separator film is a multi-layer composite film, all layers may be made of the same or different materials. The separator may be an independent component located between the positive and negative electrodes, or may be attached to surfaces of the positive and negative electrodes.

In some embodiments, the separator is a solid-state electrolyte. The solid-state electrolyte is disposed between the positive electrode and the negative electrode for transmitting ions and isolating the positive and negative electrodes at the same time.

In some embodiments, the battery cell further includes an electrolyte, and the electrolyte conducts ions between the positive electrode and the negative electrode. The electrolyte may be in a liquid state, a gel state, or a solid-state. The liquid electrolyte includes an electrolytic salt and a solvent.

In some embodiments, the electrolytic salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone. The solvent may also be an ether solvent. The ether solvent may include one or more of dimethoxyethane, diethoxyethane, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether.

The gel-state electrolyte includes a polymer as a polymer network of the electrolyte in combination with an ionic liquid-lithium salt.

The solid-state electrolyte includes a polymer solid-state electrolyte, an inorganic solid-state electrolyte, and a composite solid-state electrolyte.

In an example, the polymer solid-state electrolyte may be polyether (polyoxyethylene), polysiloxane, polycarbonate, polyacrylonitrile, polyvinylidene fluoride, polymethyl methacrylate, single-ion polymer, polyionic liquid-lithium salt, or cellulose.

In an example, the inorganic solid-state electrolyte may include one or more of an oxide solid electrolyte (crystalline perovskite, a sodium superionic conductor, garnet, an amorphous LiPON film), a sulfide solid electrolyte (a crystalline lithium superionic conductor (lithium germanium phosphorus sulfur and sulfur silver germanium ore), an amorphous sulfide), a halide solid electrolyte, a nitride solid electrolyte, and a hydride solid electrolyte.

In an example, the composite solid-state electrolyte is formed by adding an inorganic solid-state electrolyte filler to a polymer solid electrolyte.

In some embodiments, the electrode assembly is a wound structure. The positive electrode plate and the negative electrode plate are wound into a wound structure.

In some embodiments, the electrode assembly is provided with tabs, and the tabs may lead current out from the electrode assembly. The tabs include a positive tab and a negative tab.

In some embodiments, the battery cell may include a housing. The housing is configured to encapsulate components such as the electrode assembly and the electrolyte. The housing may be a steel housing, an aluminum housing, a plastic housing (for example, polypropylene), a composite metal housing (for example, a copper-aluminum composite housing), or an aluminum-plastic film, or the like.

In an example, the battery cell can be a cylindrical battery cell or a prismatic battery cell.

The battery mentioned in the embodiments of the present application is a single physical module that includes one or more battery cells for providing a higher voltage and capacity.

In some embodiments, the battery may be a battery module. When a plurality of battery cells are provided, the plurality of battery cells are arranged and fixed to form a battery module.

In some embodiments, the battery may be a battery pack, the battery pack includes a box and a battery cell, and the battery cell or battery module is accommodated in the box.

In some embodiments, the box may be used as part of the chassis structure of a vehicle. For example, part of the box may become at least part of the chassis of a vehicle, or part of the box may become at least parts of a cross beam and longitudinal beam of a vehicle.

In some embodiments, the battery may be an energy storage apparatus. The energy storage apparatus includes an energy storage container, an energy storage cabinet, or the like.

The battery has outstanding advantages such as high energy density, low environmental pollution, high power density, long service life, wide application range, and low self-discharge rate, and is an important part of the development of new energy today.

The battery cell generally includes a housing and an electrode assembly accommodated in the housing. The electrode assembly includes a main body portion and tabs provided on the main body portion, and the tabs are configured to output or input electrical energy of the electrode assembly. The tabs include a first tab and a second tab with opposite polarities. The first tab is generally connected to an electrode terminal mounted on the housing in an insulating manner, and the second tab is generally electrically connected to the housing.

In the development of battery technology, how to improve the reliability of the battery is an urgent technical problem that needs to be solved in the battery technology. Currently, the housing is a metal housing, the first tab is prone to lapping against the housing, leading to a high risk of an internal short circuit in the battery cell, so the reliability of the battery is low.

In view of this, to address the problem of low reliability of the battery resulting from an internal short circuit in the battery cell due to the tab being prone to lapping against the housing, some embodiments of the present application provide a battery cell, including a housing, an electrode terminal, an electrode assembly, and a first insulating member. The housing has a first wall and a second wall, where the second wall surrounds an edge of the first wall. The electrode terminal is mounted on the first wall in an insulating manner. The electrode assembly is accommodated in the housing, and the electrode assembly includes a main body portion, a first tab, and a second tab, where the first tab and the second tab have opposite polarities, along a thickness direction of the first wall, the main body portion has a first end surface close to the first wall, the first tab and the second tab are both provided on the first end surface, the first tab is electrically connected to the electrode terminal, and the second tab is electrically connected to the housing. The first insulating member is provided on an outer peripheral surface of the main body portion, and a portion of the first insulating member is located between the first tab and the second wall to insulate and isolate the first tab and the second wall from each other.

In the battery cell with this structure, the first tab and the second tab of the electrode assembly are both provided on the same end surface (that is, the first end surface) of the main body portion, which is conducive to saving the space occupied by the electrode assembly, so as to increase the energy density of the battery cell having such an electrode assembly. The battery cell further includes a first insulating member, where a portion of the first insulating member is located between the first tab and the second wall of the housing, so as to insulate and isolate the first tab from the second wall, thereby mitigating the risk of an internal short circuit in battery cell caused by the first tab lapping against the second wall (that is, the housing of the battery), and thus the battery has higher reliability.

The electrode assembly disclosed in the embodiments of the present application may be used in, but is not limited to, electric apparatuses such as vehicles, ships, or aircraft. The battery cell, battery, and the like disclosed in the present application may be used to constitute a power supply system of that electric apparatus, which is conducive to addressing the problem of low reliability of the battery resulting from an internal short circuit in the battery cell due to the tab lapping against the housing.

The embodiments of the present application provide an electric apparatus using a battery as a power source, and the electric apparatus may be, but is not limited to, a mobile phone, a tablet, a laptop computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, an electric apparatus according to an embodiment of the present application being a vehicle is used as an example for description of the following embodiments.

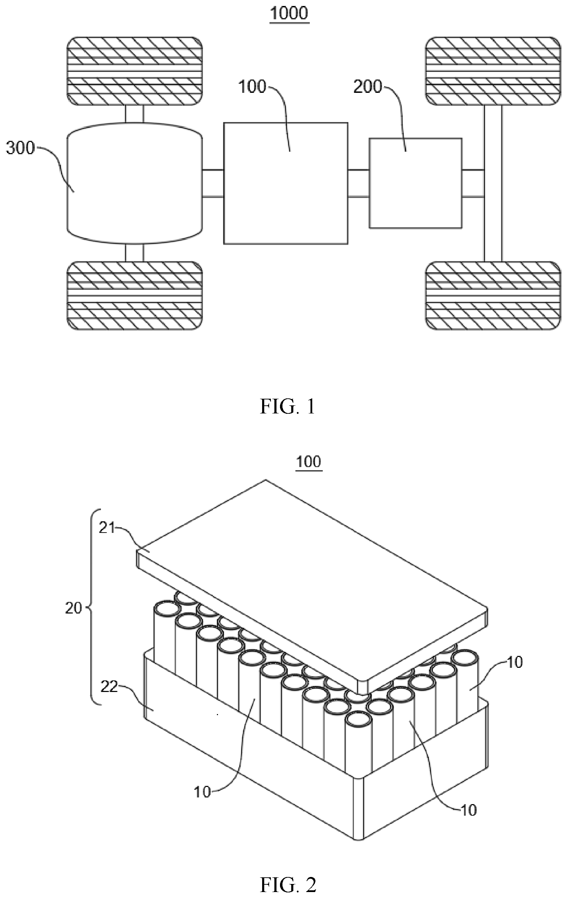

Referring to FIG. 1, FIG. 1 is a schematic structural diagram of a vehicle according to some embodiments of the present application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, where the battery 100 may be disposed at the bottom of the vehicle 1000, front of the vehicle 1000 or rear of the vehicle 1000. The battery 100 may be configured to supply power to the vehicle 1000. For example, the battery 100 may be used as an operational power source or a usage power source for the vehicle 1000. The vehicle 1000 may further include a controller 200 and a motor 300, where the controller 200 is configured to control the battery 100 to supply power to the motor 300, for example, to satisfy a working electricity need during start, navigation, and driving of the vehicle 1000.

In some embodiments of the present application, the battery 100 may be used as not only the operational power source or the usage power source for the vehicle 1000 but also a driving power source for the vehicle 1000, replacing or partially replacing fossil fuel or natural gas to provide driving traction for the vehicle 1000.

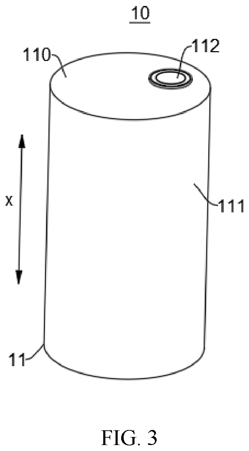

Referring to FIG. 2 and FIG. 3, FIG. 2 is a three-dimensional exploded view of a battery 100 according to some embodiments of the present application. The battery 100 includes a box 20 and a battery cell 10, where the battery cell 10 is configured to be accommodated in the box 20.

The box 20 is configured to provide an assembly space for the battery cell 10. The box 20 may be a variety of structures. In some embodiments, the box 20 may include a first box body 21 and a second box body 22. The first box body 21 and the second box body 22 fit together to jointly define an assembly space for accommodating the battery cell 10. The second box body 22 may be a hollow structure with one end open, the first box body 21 may be a plate structure, where the first box body 21 covers the open side of the second box body 22, so that the first box body 21 and the second box body 22 jointly define the assembly space. Alternatively, the first box body 21 and the second box body 22 may both be hollow structure with one side open, and the open side of the first box body 21 covers the open side of the second box body 22.

Certainly, the box 20 formed by the first box body 21 and the second box body 22 may be of various shapes, for example, a cylinder, a cuboid, a cube, or the like. Exemplarily, in FIG. 2, the shape of the box 20 is a cuboid.

In the battery 100, one or more battery cells 10 may be provided in the box 20. When a plurality of battery cells 10 are provided in the box 20, the plurality of battery cells 10 may be connected in series, parallel, or series-parallel, where being connected in series-parallel means that the plurality of battery cells 10 are connected in both series and parallel. The plurality of battery cells 10 may be directly connected in series, parallel, or series-parallel, and then an entirety of the plurality of battery cells 10 is accommodated in the box 20. Certainly, the battery 100 may be formed by a plurality of battery cells 10 being connected in series, parallel, or series-parallel first to form a battery module, and then a plurality of battery modules being connected in series, parallel, or series-parallel to form an entirety which is accommodated in the box 20.

In some embodiments, the battery 100 may further include other structures. For example, the battery 100 may further include a busbar, and the busbar is configured to connect plurality of battery cells 10 to implement electrical connection between the plurality of battery cells 10.

Each battery cell 10 may be a secondary battery or a primary battery, and may be a lithium-sulfur battery, a sodium-ion battery, or a magnesium-ion battery, but is not limited thereto. The battery cell 10 may be in a cylinder, a prism, or other shapes. Exemplarily, in FIG. 3, the battery cell 10 is a cylindrical structure.

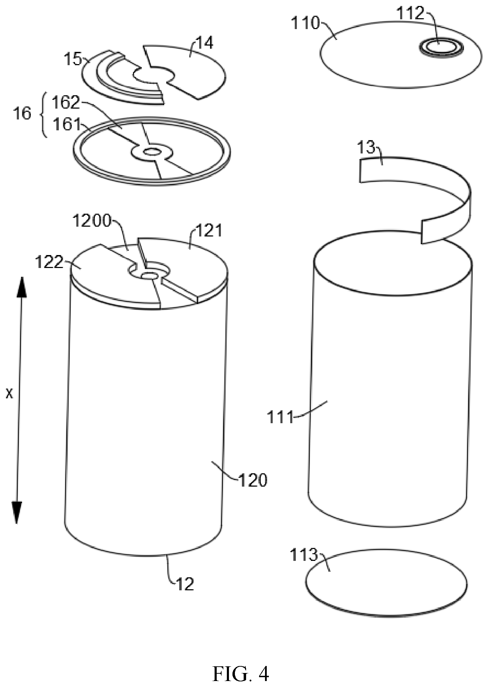

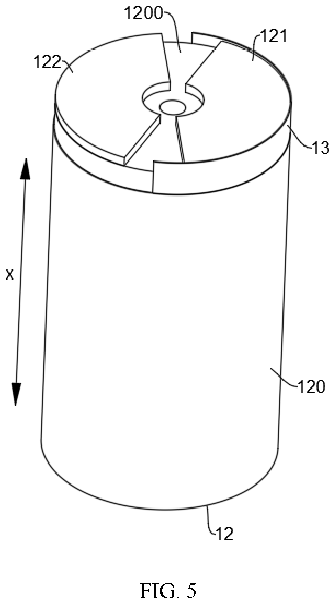

According to some embodiments of the present application, referring to FIG. 3 to FIG. 5, FIG. 3 is a three-dimensional view of a battery cell 10 according to some embodiments of the present application, FIG. 4 is a three-dimensional exploded view of a battery cell 10 according to some embodiments of the present application, and FIG. 5 is a schematic diagram of an electrode assembly 12 and a first insulating member 13 according to some embodiments of the present application.

The battery cell 10 includes a housing 11, an electrode terminal 112, an electrode assembly 12, and a first insulating member 13. The housing 11 has a first wall 110 and a second wall 111, where the second wall 111 surrounds an edge of the first wall 110. The electrode terminal 112 is mounted on the first wall 110 in an insulating manner. The electrode assembly 12 is accommodated in the housing 11, and the electrode assembly 12 includes a main body portion 120, a first tab 121, and a second tab 122, where the first tab 121 and the second tab 122 have opposite polarities, along a thickness direction x of the first wall, the main body portion 120 has a first end surface 1200 close to the first wall 110, the first tab 121 and the second tab 122 are both provided on the first end surface 1200, the first tab 121 is electrically connected to the electrode terminal 112, and the second tab 122 is electrically connected to the housing 11. The first insulating member 13 is provided on an outer peripheral surface of the main body portion 120, and a portion of the first insulating member 13 is located between the first tab 121 and the second wall 111 to insulate and isolate the first tab 121 and the second wall 111 from each other.

The housing 11 is a component for accommodating the electrode assembly 12, and the housing 11 may also be configured to accommodate the electrolyte, such as the electrolyte solution. Referring to FIG. 4, in some embodiments, the housing 11 includes a housing body and an end cover. A receiving cavity is formed inside the housing body, the receiving cavity is configured to accommodate the electrode assembly 12, the housing body has an opening communicating with the receiving cavity, and the end cover covers the opening of the housing body and forms a sealed connection to form a sealed space for accommodating the electrode assembly 12 and an electrolyte. Optionally, the housing 11 may further include a bottom plate 113, openings are formed at two ends of the housing body, one of the openings is closed by the end cover, and the other opening is closed by the bottom plate 113.

In some embodiments, the material of the housing 11 may be metal or a combination of metal and non-metal. For example, the housing 11 may be made of metal, such as aluminum, copper, iron, aluminum, steel, or aluminum alloy. Alternatively, for example, a portion of the housing 11 may be made of metal, and the rest may be made of non-metal, for example, the end cover of the housing 11 may be made of metal, and the housing body or other portions of the housing 11 may be made of non-metal materials.

In some embodiments, when the battery cell 10 is assembled, the electrode assembly 12 may be first placed into the housing body, and then the electrolyte is filled into the housing body, and then the end cover covers the opening of the housing body to complete the assembly of the battery cell 10. Alternatively, in some embodiments, when the battery cell 10 is assembled, the electrode assembly 12 may be first placed into the housing body, then the end cover covers the opening of the housing body, then the electrolyte is filled into the housing body through an injection hole on the end cover, and then the injection hole is closed to complete the assembly of the battery cell 10.

The housing 11 may be of various shapes, for example, cylinder or a prismatic structure. The shape of the housing 11 may be determined according to the specific shape of the electrode assembly 12. For example, if the electrode assembly 12 is a cylindrical structure, a cylindrical housing 11 may be selected.

The first wall 110 is a partial structure of the housing 11, the first wall 110 may be mounted with the electrode terminal 112 in an insulating manner, and the electrode terminal 112 is configured to connect to the first tab 121 of the electrode assembly 12. The first wall 110 may be made of a conductive material, such as a metal material. For example, the first wall 110 is made of materials such as aluminum, copper, iron, aluminum, steel, or aluminum alloy. In some embodiments, the first wall 110 may be electrically connected to the second tab 122 of the electrode assembly 12. In some embodiments, the first wall 110 may be the end cover of the housing 11. The second wall 111 is a portion surrounding the edge of the first wall 110. In some embodiments, the first wall 110 is the end cover of the housing 11, and the second wall 111 may be the housing body of the housing 11.

In some embodiments, the first wall 110 may be connected to the second wall 111 by welding, adhering, snap-fitting, or other connection methods. In some embodiments, the first wall 110 and the second wall 111 may be integrally formed.

The electrode terminal 112 is a component mounted on the first wall 110 in an insulating manner, and the electrode terminal 112 is configured to connect to the first tab 121 of the electrode assembly 12, so that current flows into or out of the second tab 122 through the electrode terminal 112. In some embodiments, the electrode terminal 112 is made of a metal material, such as aluminum, copper, iron, aluminum, steel, alloy, or composite metal.

In some embodiments, the electrode terminal 112 may be mounted on the first wall 110 through an insulating structure. For example, the first wall 110 is formed with a through hole, a peripheral wall of the electrode terminal 112 is sleeved with an insulating structure, and the insulating structure is provided between the first wall 110 and the electrode terminal 112.

It should be noted that the electrode assembly 12 is a component in which electrochemical reactions take place in the battery cell 10. The structure of the electrode assembly 12 can be various. Exemplarily, the electrode assembly 12 may be a wound structure formed by winding a positive electrode plate, a separator, and a negative electrode plate, and the main body portion 120 of the electrode assembly 12 is cylindrical. Exemplarily, the separator is a separator film, and the main material of the separator film may be selected from at least one of glass fiber, non-woven fabric, polyethylene, polypropylene, and polyvinylidene fluoride.

The main body portion 120 is a region where the electrode assembly 12 undergoes chemical reactions in the battery cell 10. The main body portion 120 is a structure formed by winding a region of the positive electrode plate coated with a positive electrode active material layer, a separator, and a region of the negative electrode plate coated with a negative electrode active material layer, and mainly works by moving metal ions between the positive electrode plate and the negative electrode plate with opposite polarities.

In some embodiments, the thickness direction x of the first wall may be parallel to the height direction of the electrode assembly 12. The first end surface 1200 may be an end surface of the main body portion 120 facing the first wall 110. For example, the first end surface 1200 may be a top surface of the main body portion 120.

The first tab 121 and the second tab 122 are both provided at one end of the main body portion 120. That is, the first tab 121 and the second tab 122 are provided at the same end of the main body portion 120 in the thickness direction x of the first wall, and are located at one end of the main body portion 120 facing the first wall 110.

The first tab 121 and the second tab 122 are respectively configured to output or input the positive and negative electrodes of the electrode assembly 12. If the first tab 121 is configured to input or output the positive electrode of the electrode assembly 12, the first tab 121 is a component formed by stacking and connecting regions of the positive electrode plate not coated with the positive electrode active material layer; and correspondingly, if the second tab 122 is configured to output or input the negative electrode of the electrode assembly 12, the second tab 122 is a component formed by stacking and connecting regions of the negative electrode plate not coated with the negative electrode active material layer. If the first tab 121 is configured to output or input the negative electrode of the electrode assembly 12, the first tab 121 is a component formed by stacking and connecting regions of the negative electrode plate not coated with the negative electrode active material layer; and correspondingly, if the second tab 122 is configured to input or output the positive electrode of the electrode assembly 12, the second tab 122 is a component formed by stacking and connecting regions of the positive electrode plate not coated with the positive electrode active material layer. Exemplarily, in the embodiments of the present application, the first tab 121 is configured to output or input the positive electrode of the electrode assembly 12, and the second tab 122 is configured to output or input the negative electrode of the electrode assembly 12.

"The first tab 121 is electrically connected to the electrode terminal 112" may be understood as that the first tab 121 is directly or indirectly connected to the electrode terminal 112 to achieve electrical connection between the first tab 121 and the electrode terminal 112. Exemplarily, in some embodiments, the first tab 121 is directly welded to the electrode terminal 112. In some embodiments, the first tab 121 is connected to the electrode terminal 112 through a first adapting member 14, where the first tab 121 and the electrode terminal 112 may be respectively welded to the first adapting member 14.

"The second tab 122 is electrically connected to the housing 11" may be understood as that the second tab 122 is directly or indirectly connected to the housing 11 to achieve electrical connection between the second tab 122 and the housing 11. Exemplarily, in some embodiments, the second tab 122 is directly connected to the first wall 110 of the housing 11. In some embodiments, the second tab 122 is connected to the second wall 111 of the housing 11. In some embodiments, the second tab 122 is connected to the housing 11 through a second adapting member 15. For example, the second tab 122 and the first wall 110 may be respectively welded to the second adapting member 15.

The outer peripheral surface of the main body portion 120 is provided with a first insulating member 13, and a portion of the first insulating member 13 is located between the first tab 121 and the second wall 111. The first insulating member 13 has insulating properties, and the first insulating member 13 is configured to insulate and isolate the first tab 121 from the second wall 111, so as to mitigate the risk of an internal short circuit in the battery cell 10 caused by the first tab 121 lapping against the second wall 111. In some embodiments, the first insulating member 13 may be sheet-shaped, plate-shaped, or ring-shaped. In some embodiments, the first insulating member 13 may be a rubber member, a silicone member, or a plastic member. In some embodiments, the first insulating member 13 is made of an insulating material, such as polypropylene, polyethylene, or other materials with insulating properties.

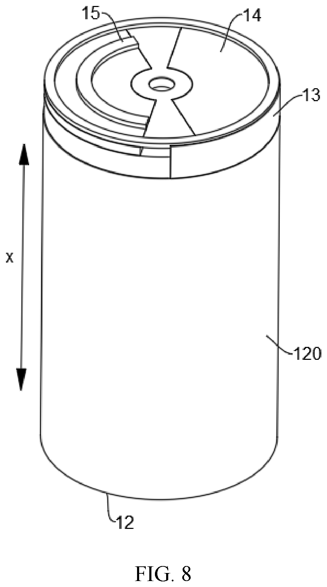

"A portion of the first insulating member 13 is located between the first tab 121 and the second wall 111" may be understood as that a portion of the first insulating member 13 is connected to the outer peripheral surface of the main body portion 120, and the first insulating member 13 is located between the first tab 121 and the second wall 111 to insulate and isolate the first tab 121 from the second wall 111. It can also be understood as that the first insulating member 13 is provided on the outer periphery of the electrode assembly 12, and a portion is located between the first tab 121 and the second wall 111 to insulate and isolate the first tab 121 from the second wall 111. Exemplarily, referring to FIG. 8, a portion of the first insulating member 13 is connected to the main body portion 120, a portion of the first insulating member 13 is located between the first tab 121 and the second wall 111 to insulate and isolate the first tab 121 from the second wall 111, and the remaining portion of the first insulating member 13 is provided on other structures of the battery cell 10.

In the above technical solution, the first tab 121 and the second tab 122 of the electrode assembly 12 are both provided on the same end surface (that is, the first end surface 1200) of the main body portion 120, which is conducive to saving the space occupied by the electrode assembly 12 in the thickness direction x of the first wall, so as to increase the energy density of the battery cell 10 having such an electrode assembly 12. The battery cell 10 further includes a first insulating member 13, where a portion of the first insulating member 13 is located between the first tab 121 and the second wall 111 of the housing 11, so as to insulate and isolate the first tab 121 from the second wall 111, thereby mitigating the risk of an internal short circuit in the battery cell 10 caused by the first tab 121 lapping against the second wall 111 (that is, the housing 11 of the battery 100), and thus the battery 100 has higher reliability.

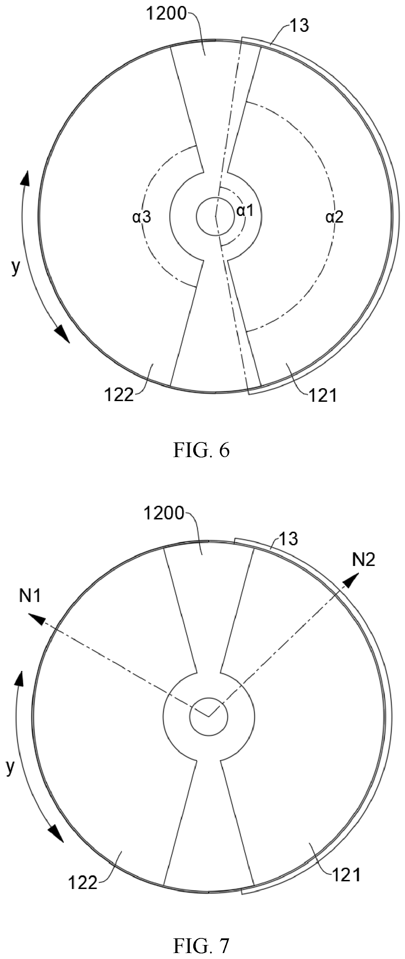

According to some embodiments of the present application, referring to FIG. 5 and FIG. 6, FIG. 6 is a top view of an electrode assembly 12 and a first insulating member 13 according to some embodiments of the present application. Along a circumferential direction y of the main body portion, a central angle corresponding to the first insulating member 13 is α1, and α1 < 360°.

In some embodiments, the first insulating member 13 is provided on the outer periphery of the main body portion 120 and extends along the circumferential direction y of the main body portion. "Along a circumferential direction y of the main body portion, a central angle corresponding to the first insulating member 13 is α1, and α1 < 360°" may be understood as that the first insulating member 13 does not wrap around the main body portion 120 for one circle, that is, the first insulating member 13 wraps around a portion of the circumferential direction y of the main body portion rather than the entire circumferential direction. It can also be understood as that along the axial direction of the main body portion 120, the first insulating member 13 has two edges distant from each other, and the angle between the two edges is α1.

In some embodiments, the central angle α1 corresponding to the first insulating member 13 may be an angle value less than 360°. For example, the central angle may be equal to 1°, 2°, ..., 44°, 45°, 46°, ... 90°, 91°, 92°, ...,179°, 180°, ..., 358°, 359°, or any value between two adjacent values.

In some embodiments, along the circumferential direction y of the main body portion, the first tab 121 and the second tab 122 may be spaced apart. Exemplarily, the surface of the first tab 121 facing the first wall 110 is fan-shaped and coaxial with the first end surface 1200. Due to the existence of the second tab 122, the central angle corresponding to the first surface 160 is less than 360°. The first insulating member 13 is configured to insulate and isolate the first tab 121 from the second wall 111, and the first insulating member 13 is provided corresponding to the central angle of the first tab 121. Due to the existence of the second tab 122, the first insulating member 13 does not need to be provided for one circle along the circumferential direction y of the main body portion, that is, the central angle α1 corresponding to the first insulating member 13 may be an angle value less than 360°.

In the above technical solution, the central angle corresponding to the first insulating member 13 is set as α1 to be less than 360°, that is, the first insulating member 13 does not need to wrap fully around the entire outer periphery of the main body portion 120. Under the condition that the first insulating member 13 insulates and isolates the first tab 121 from the second wall 111, the amount of material used for the first insulating member 13 is reduced, achieving the effect of saving the manufacturing cost of the battery cell 10, and thus reducing the manufacturing cost of the battery 100.

In other some embodiments, along the circumferential direction y of the main body portion, the central angle α1 corresponding to the first insulating member 13 may be greater than or equal to 360°. For example, the first insulating member 13 may surround at least one circle of the outer periphery of the main body portion 120.

According to some embodiments of the present application, referring to FIG. 6, along the circumferential direction y of the main body portion, the central angle corresponding to the first insulating member 13 is α1, and a central angle corresponding to the first tab 121 is α2, satisfying α1 > α2.

In some embodiments, the first insulating member 13 is provided on the outer periphery of the main body portion 120 and extends along the circumferential direction y of the main body portion. "Along the circumferential direction y of the main body portion, a central angle corresponding to the first insulating member 13 is α1" may also be understood as that along the axial direction of the main body portion 120, the first insulating member 13 has two edges distant from each other, and the angle between the two edges is α1.

Along the circumferential direction y of the main body portion, the central angle corresponding to the first tab 121 is α2, which can be that the first tab 121 has two edges distant from each other in the circumferential direction y of the main body portion, and the angle between the two edges is α2. Exemplarily, the first tab 121 has a second surface 1211 facing the first wall 110, the second surface 1211 is fan-shaped, along the circumferential direction y of the main body portion, the second surface 1211 has a first edge 12110 and a second edge 12111 that are distant from each other, and the angle between the first edge 12110 and the second edge 12111 is α2.

"α1 > α2" may be understood as that the central angle α1 corresponding to the first insulating member 13 is greater than the central angle α2 corresponding to the first tab 121, that is, in the circumferential direction y of the main body portion, the first insulating member 13 may wrap fully around the first tab 121, that is, in the circumferential direction y of the main body portion, the two ends of the first insulating member 13 distant from each other respectively exceed the two ends of the first tab 121 distant from each other. Alternatively, it can be understood as that in the circumferential direction y of the main body portion, the dimension of the first insulating member 13 is greater than the dimension of the first tab 121, so that the first insulating member 13 can effectively insulate and isolate the first tab 121 from the second wall 111.

Exemplarily, in some embodiments, the central angle α1 corresponding to the first insulating member 13 may be 160°, and the central angle α2 corresponding to the first tab 121 may be 155°. The central angle α1 corresponding to the first insulating member 13 may be 150°, and the central angle α2 corresponding to the first tab 121 may be 130°. The central angle α1 corresponding to the first insulating member 13 may be 280°, and the central angle α2 corresponding to the first tab 121 may be 270°.

In the above technical solution, the central angle α1 corresponding to the first insulating member 13 is set to be greater than the central angle α2 corresponding to the first tab 121, so that the first insulating member 13 can effectively insulate and isolate the first tab 121 from the second wall 111, increasing the creepage distance between the first tab 121 and the second wall 111, thereby mitigating the risk of an internal short circuit in the battery cell 10, and thus the battery 100 has higher reliability.

According to some embodiments of the present application, referring to FIG. 6, along the circumferential direction y of the main body portion, the central angle corresponding to the first insulating member 13 is α1, and a central angle corresponding to the second tab 122 is α3, satisfying α1 + α3 < 360°.

In some embodiments, the first insulating member 13 is provided on the outer periphery of the main body portion 120 and extends along the circumferential direction y of the main body portion. "Along a circumferential direction y of the main body portion, a central angle corresponding to the first insulating member 13 is α1" may also be understood as that along an axial direction of the main body portion 120, the first insulating member 13 has two edges distant from each other, and the angle between the two edges is α1.

Along the circumferential direction y of the main body portion, the central angle corresponding to the second tab 122 is α3, which may be that the second tab 122 has two edges distant from each other in the circumferential direction y of the main body portion, and the angle between the two edges is α3. Exemplarily, the second tab 122 has a third surface 1221 facing the first wall 110, the third surface 1221 is fan-shaped, along the circumferential direction y of the main body portion, the third surface 1221 has a third edge 12210 and a fourth edge 12211 that are distant from each other, and the angle between the third edge 12210 and the fourth edge 12211 is α3.

"α1 + α3 < 360°" may be understood as that the sum of the central angle of the first insulating member 13 and the central angle of the second tab 122 is less than 360°, that is, it can be understood as that under the condition that the first insulating member 13 insulates and isolates the first tab 121 from the second wall 111, a gap is formed between the first insulating member 13 and the second tab 122 in the circumferential direction y of the main body portion.

Exemplarily, in some embodiments, the central angle of the second tab 122 may be 150°, the central angle of the first tab 121 may be 120°, and the central angle of the first insulating member 13 may be 130°. The central angle of the second tab 122 may be 180°, the central angle of the first tab 121 may be 170°, and the central angle of the first insulating member 13 may be 175°.

In the above technical solution, the sum of the central angle α1 corresponding to the first insulating member 13 and the central angle α2 corresponding to the second tab 122 is limited to be less than 360°, so that the amount of material used for the first insulating member 13 is reduced under the condition that the first insulating member 13 insulates and isolates the first tab 121 from the second wall 111, thereby achieving the purpose of saving the manufacturing cost of the battery cell 10, and thus reducing the manufacturing cost of the battery 100.

According to some embodiments of the present application, referring to FIG. 7, FIG. 7 is a top view of an electrode assembly 12 and a first insulating member 13 according to some embodiments of the present application. Along the circumferential direction y of the main body portion, the first insulating member 13 does not surround the second tab 122.

In some embodiments, "along the circumferential direction y of the main body portion, the first insulating member 13 does not surround the second tab 122" may be understood as that the second tab 122 does not need to be provided between the second tab 122 and the second wall 111. In some embodiments, it can also be understood as that along any ray direction emitted from a central axis of the main body portion 120 and perpendicular to the central axis of the main body portion 120, an orthographic projection of the first insulating member 13 and an orthographic projection of the second tab 122 do not overlap.

"Along any ray direction emitted from a central axis of the main body portion 120 and perpendicular to the central axis of the main body portion 120" may be understood as a ray direction emitted outward from the central axis of the main body portion 120 as a starting point and perpendicular to the central axis of the main body portion 120. For example, in FIG. 7, two rays emitted in different directions and conforming to "along any ray direction emitted from a central axis of the main body portion 120 and perpendicular to the central axis of the main body portion 120" are shown by N1 and N2. Exemplarily, in some embodiments, when the main body portion 120 is cylindrical, the above-mentioned "along any ray direction emitted from a central axis of the main body portion 120 and perpendicular to the central axis of the main body portion 120" is a radial direction parallel to the first end surface 1200 of the main body portion 120 and in a single emission direction.

"Along any ray direction emitted from a central axis of the main body portion 120 and perpendicular to the central axis of the main body portion 120, an orthographic projection of the first insulating member 13 and an orthographic projection of the second tab 122 do not overlap" may be understood as that on a line of sight parallel to the any ray direction, only one of the first insulating member 13 and the second tab 122 may be seen. Exemplarily, from a hypothetical viewpoint at the center of the first end surface 1200 observing outward and perspective, only one of the first insulating member 13 and the second tab 122 may be seen through perspective, and the two cannot be seen at the same time.

Exemplarily, referring to FIG. 7, in some embodiments, the first end surface 1200 is circular, the surfaces of the first tab 121 and the second tab 122 are both fan-shaped, and both are coaxially arranged with the first end surface 1200. The first insulating member 13 is an arc-shaped curved sheet-like structure provided on the outer periphery of the main body portion 120, and the first insulating member 13 can wrap around the first tab 121 without wrapping around the second tab 122.

In the above technical solution, along the circumferential direction y of the main body portion, the first insulating member 13 does not surround the second tab 122, so that the first insulating member 13 can be provided without corresponding to the second tab 122 under the condition of effectively insulating and isolating the first tab 121 from the second wall 111, that is, the second tab 122 does not need to be provided between the second tab 122 and the second wall 111, thereby effectively reducing the amount of material used for the first insulating member 13, and thus reducing the manufacturing cost of the battery 100.

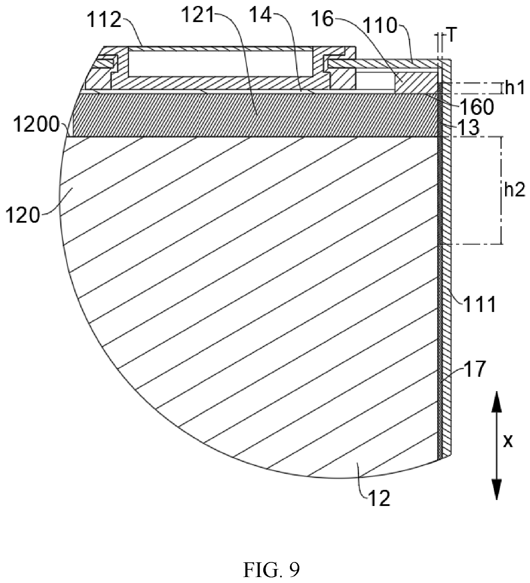

According to some embodiments of the present application, referring to FIG. 4, FIG. 8, and FIG. 9, FIG. 8 is a three-dimensional view of an electrode terminal 112, a first insulating member 13, and a second insulating member 16 according to some embodiments of the present application, and FIG. 9 is a schematic diagram of an interior of a partial structure of a battery cell 10 according to some embodiments of the present application.

The battery cell 10 further includes a first adapting member 14 and a second adapting member 15. The first adapting member 14 connects the first tab 121 to the electrode terminal 112. The second insulating member 16 is provided between the first adapting member 14 and the housing 11 to insulate and isolate the first adapting member 14 from the housing 11.

The first adapting member 14 is a component provided between the first tab 121 and the electrode terminal 112, and the first adapting member 14 is made of a conductive material. For example, the material of the first adapting member 14 may be aluminum, copper, iron, aluminum, steel, or aluminum alloy. The material of the first adapting member 14 may be the same as the material of the first tab 121. The material of the first adapting member 14 may be the same as the material of the electrode terminal 112.

The connection relationship between the first adapting member 14 and the first tab 121 includes but is not limited to welding, adhering, snap-fitting, connection through other connection members, and other connection relationships. The connection relationship between the first adapting member 14 and the electrode terminal 112 includes but is not limited to welding, adhering, snap-fitting, connection through other connection members, and other connection relationships.

The second insulating member 16 is provided between the first adapting member 14 and the housing 11, and the second insulating member 16 has insulating properties and can insulate and isolate the housing 11 from the first adapting member 14. In some embodiments, the second insulating member 16 may be sheet-shaped, plate-shaped, or ring-shaped. In some embodiments, the second insulating member 16 may be a rubber member, a silicone member, or a plastic member. In some embodiments, the second insulating member 16 is made of an insulating material, such as polypropylene, polyethylene, or other materials with insulating properties.

In some embodiments, the second insulating member 16 can insulate and isolate the second adapting member 15 from the first wall 110 and the second wall 111. In some embodiments, the second insulating member 16 may be the lower plastic of the battery cell 10. Exemplarily, the battery cell 10 further includes a second adapting member 15, where the second adapting member 15 connects the second tab 122 to the first wall 110. The second insulating member 16 includes an insulating member body 161 and a separating strip 162. The insulating member body 161 is ring-shaped and provided on the first end surface 1200. The first tab 121 and the second tab 122 can support the lower surface of the insulating member body 161 (in some other embodiments, the insulating member body 161 may be supported on the first end surface 1200, and the first tab 121 and the second tab 122 are located inside the insulating member body 161). An upper surface of the insulating member body 161 faces the first wall 110. The separating strip 162 is provided inside the insulating member body 161 to divide the internal space of the insulating member body 161 into two sub-spaces, one sub-space accommodates the first adapting member 14, and the other sub-space accommodates the second adapting member 15. Along the thickness direction x of the first wall, the upper surface of the insulating member body 161 is closer to the first wall 110 than the first adapting member 14. The functions of the second insulating member 16 include insulating and isolating the first adapting member 14 from the second adapting member 15, insulating and isolating the first adapting member 14 from the first wall 110, and insulating and isolating the first adapting member 14 from the second wall 111.

In the above technical solution, the first adapting member 14 connects the first tab 121 to the electrode terminal 112, so that the connection difficulty between the first tab 121 and the electrode terminal 112 can be reduced, and the manufacturing efficiency of the battery cell 10 can be improved. A second insulating member 16 is provided between the first adapting member 14 and the housing 11, so as to insulate and isolate the first adapting member 14 from the housing 11, increasing the creepage distance between the first adapting member 14 and the housing 11, thereby mitigating the risk of an internal short circuit in the battery cell 10, and the battery 100 has higher reliability.

According to some embodiments of the present application, referring to FIG. 8 and FIG. 9, the first insulating member 13 is connected to the main body portion 120 and the second insulating member 16.

In some embodiments, the first insulating member 13 extends along the circumferential direction y of the main body portion, and the thickness direction x of the first wall may be parallel to a width direction of the first insulating member 13. "The first insulating member 13 is connected to the main body portion 120 and the second insulating member 16" may be understood as that in the thickness direction x of the first wall, the first insulating member 13 can include three portions, one portion is connected to the main body portion 120, the second portion may be located between the second insulating member 16 and the main body portion 120 to insulate and isolate the first tab 121 from the second wall 111, and the remaining portion is connected to the second insulating member 16.

In some embodiments, the connection relationship between the first insulating member 13 and the main body portion 120 includes but is not limited to adhering, welding, binding connection, or other connection methods. The connection relationship between the first insulating member 13 and the second insulating member 16 includes but is not limited to adhering, welding, binding connection, or other connection methods. In some embodiments, the first insulating member 13 may be in direct contact with the surface of the second insulating member 16.

In the above technical solution, the first insulating member 13 is set to be connected to the main body portion 120 and the second insulating member 16, so that the first insulating member 13 can be stably located on the outer peripheral surface of the main body portion 120, thereby effectively insulating and isolating the first tab 121 from the second wall 111, mitigating the risk of an internal short circuit in the battery cell 10 caused by the first tab 121 lapping against the housing 11, and thus the battery 100 has higher reliability.

In other some embodiments, the first insulating member 13 may not be connected to the second insulating member 16.

According to some embodiments of the present application, referring to FIG. 9, along the thickness direction x of the first wall, the second insulating member 16 has a first surface 160 facing the electrode assembly 12, the first surface 160 is connected to the first tab 121, and along a direction from the main body portion 120 toward the first wall 110, the first insulating member 13 extends beyond the first surface 160.

The first surface 160 is a surface of the second insulating member 16 facing the electrode assembly 12 in the thickness direction x of the first wall. Exemplarily, the first surface 160 is a lower surface of the second insulating member 16, and an upper surface of the second insulating member 16 faces the first wall 110. In some embodiments, the first surface 160 is connected to the first tab 121.

"Along a direction from the main body portion 120 toward the first wall 110, the first insulating member 13 extends beyond the first surface 160" may be understood as that the first insulating member 13 can extend beyond the first surface 160 in the direction from the main body portion 120 toward the first wall 110, that is, in the thickness direction of the first insulating member 13, the orthographic projection of the first insulating member 13 and the orthographic projection of the second insulating member 16 at least partially overlap. It can also be understood as that the second tab 122 below the first surface 160 is more below the surface of the first insulating member 13 facing the first wall 110.

In the above technical solution, the first insulating member 13 is set to extend beyond the first surface 160, the creepage distance between the first tab 121 and the second wall 111 can be effectively increased, the risk of the first tab 121 lapping against the second wall 111 can be effectively mitigated, thereby mitigating the risk of an internal short circuit in the battery cell 10, and thus the battery 100 has higher reliability.

According to some embodiments of the present application, along the direction from the main body portion 120 toward the first wall 110, a dimension by which the first insulating member 13 extends beyond the first surface 160 is h1, satisfying h1 ≥ 0.5 mm.

"Along the direction from the main body portion 120 toward the first wall 110, a dimension by which the first insulating member 13 extends beyond the first surface 160 is h1" may be understood as that along the direction from the main body portion 120 toward the first wall 110, the dimension by which the first insulating member 13 extends beyond the first tab 121 is h1. In some embodiments, h1 may be a value greater than or equal to 0.5 mm. For example, h1 may be 0.5 mm, 0.6 mm, 0.7 mm, 0.8 mm, or a larger value.

In the above technical solution, the dimension h1 by which the first insulating member 13 extends beyond the first surface 160 is set to be greater than or equal to 0.5 mm, so that the first insulating member 13 can effectively cover the first tab 121 in the direction from the main body portion 120 toward the first wall 110, effectively increasing the creepage distance between the first tab 121 and the second wall 111, effectively mitigating the risk of the first tab 121 lapping against the second wall 111, thereby mitigating the risk of an internal short circuit in the battery cell 10, and thus the battery 100 has higher reliability.

According to some embodiments of the present application, h1 ≥ 1.5 mm is satisfied.

In some embodiments, h1 may be a value greater than or equal to 1.5 mm. For example, h1 may be 1.5 mm, 1.6 mm, 1.7 mm, 1.8 mm, or a larger value.

In the above technical solution, the dimension h1 by which the first insulating member 13 extends beyond the first surface 160 is set to be greater than or equal to 1.5 mm, on one hand, a secure connection between the first insulating member 13 and the second insulating member 16 can be achieved; on the other hand, the first insulating member 13 can effectively cover the first tab 121 in the direction from the main body portion 120 toward the first wall 110, effectively increasing the creepage distance between the first tab 121 and the second wall 111, effectively mitigating the risk of the first tab 121 lapping against the second wall 111, thereby mitigating the risk of an internal short circuit in the battery cell 10, and thus the battery 100 has higher reliability.

According to some embodiments of the present application, along a direction from the first wall 110 toward the main body portion 120, the first insulating member 13 extends beyond the first end surface 1200.

The first end surface 1200 is the end surface of the main body portion 120 provided with the first tab 121 and the second tab 122. In some embodiments, on the side of the main body portion 120 facing the first wall 110, the end surface formed by the end of the separator film of the electrode assembly 12 facing the first wall 110 may be the first end surface 1200. "Along a direction from the first wall 110 toward the main body portion 120, the first insulating member 13 extends beyond the first end surface 1200" may be understood as that along the direction from the first wall 110 toward the main body portion 120, the first insulating member 13 extends beyond the end of the separator film of the electrode assembly 12 facing the first wall 110. It can also be understood as that along the direction from the first wall 110 toward the main body portion 120, the first insulating member 13 extends beyond the root of the first tab 121, and the root of the first tab 121 can be understood as an interface where the first tab 121 and the main body portion 120 meet.

In the above technical solution, the insulating member is set to extend beyond the first end surface 1200, the creepage distance between the first tab 121 and the second wall 111 can be effectively increased, the risk of the first tab 121 lapping against the second wall 111 can be effectively mitigated, thereby mitigating the risk of an internal short circuit in the battery cell 10, and thus the battery 100 has higher reliability.

According to some embodiments of the present application, along the direction from the first wall 110 toward the main body portion 120, a dimension by which the first insulating member 13 extends beyond the first end surface 1200 is h2, satisfying h2 ≥ 0.5 mm.

"Along the direction from the first wall 110 toward the main body portion 120, a dimension by which the first insulating member 13 extends beyond the first end surface 1200 is h2" may be understood as that along the direction from the first wall 110 toward the main body portion 120, the dimension by which the first insulating member 13 extends beyond the first end surface 1200 is h2. In some embodiments, h2 may be a value greater than or equal to 0.5 mm. For example, h2 may be 0.5 mm, 0.6 mm, 0.7 mm, 0.8 mm, or a larger value.

In the above technical solution, the dimension h2 by which the first insulating member 13 extends beyond the first end surface 1200 is set to be greater than or equal to 0.5 mm, so that the first insulating member 13 can effectively cover the first tab 121 in the direction from the first wall 110 toward the main body portion 120, effectively increasing the creepage distance between the first tab 121 and the second wall 111, effectively mitigating the risk of the first tab 121 lapping against the second wall 111, thereby mitigating the risk of an internal short circuit in the battery cell 10, and thus the battery 100 has higher reliability.

According to some embodiments of the present application, h2 ≥ 1.5 mm is satisfied.

In some embodiments, h2 may be a value greater than or equal to 1.5 mm. For example, h2 may be 1.5 mm, 1.6 mm, 1.7 mm, 1.8 mm, or a larger value.

In the above technical solution, the dimension h2 by which the first insulating member 13 extends beyond the first end surface 1200 is set to be greater than or equal to 1.5 mm, on one hand, a secure connection between the first insulating member 13 and the main body portion 120 can be achieved; on the other hand, the first insulating member 13 can effectively cover the first tab 121 in the direction from the first wall 110 toward the main body portion 120, effectively increasing the creepage distance between the first tab 121 and the second wall 111, effectively mitigating the risk of the first tab 121 lapping against the second wall 111, thereby mitigating the risk of an internal short circuit in the battery cell 10, and thus the battery 100 has higher reliability.

In some embodiments, the outer periphery of the electrode assembly 12 can be wrapped with an insulating film 17, and the insulating film 17 can be wrapped on the outer periphery of the main body portion 120 to insulate and isolate the main body portion 120 from the second wall 111. Referring to FIG. 9, in the thickness direction x of the first wall, the first insulating member 13 is located on the side of the insulating film 17 close to the first wall 110.

According to some embodiments of the present application, a thickness of the first insulating member 13 is T, satisfying T ≥ 30 µm.

The thickness of the first insulating member 13 may refer to the thickness of the first insulating member 13 in an unstressed condition when the first insulating member 13 is not assembled between the first tab 121 and the second wall 111. The thickness of the first insulating member 13 may also refer to the thickness of the first insulating member 13 after being compressed and deformed when the first insulating member 13 is assembled between the first tab 121 and the second wall 111. The thickness of the first insulating member 13 may also refer to the thickness dimension obtained by measuring with a thickness gauge when the first insulating member 13 is assembled between the first tab 121 and the second wall 111 and taken out from the battery cell 10.

In some embodiments, the thickness T of the first insulating member 13 may be a value greater than or equal to 30 µm. For example, T may be 30 µm, 31 µm, 32 µm, 33 µm, 34 µm, 35 µm, or a larger value.

In the above technical solution, the thickness T of the first insulating member 13 is set to be greater than or equal to 30 µm, the risk of the first insulating member 13 cracking or being pierced can be mitigated, the insulating and isolating effect of the first insulating member 13 can be improved, and the risk of an internal short circuit in the battery cell 10 caused by the first tab 121 lapping against the second wall 111 can be mitigated, so that the battery 100 has higher reliability.

According to some embodiments of the present application, the electrode assembly 12 is a wound electrode assembly 12, the first tab 121 includes a plurality of first sub-tabs 1210, and each first sub-tab 1210 has the same dimension in the winding direction of the electrode assembly 12; or, along a direction from an inner ring to an outer ring of the electrode assembly 12, dimensions of the plurality of first sub-tabs 1210 in the winding direction of the electrode assembly 12 gradually increase.

The electrode assembly 12 is a wound electrode assembly, and the electrode assembly 12 includes a first electrode plate and a second electrode plate with opposite polarities and a separator film. The first electrode plate, the second electrode plate, and the separator film are stacked and wound based on a winding axis.

The wound electrode assembly 12 includes multiple turns of the first electrode plate, the first tab 121 includes a plurality of first sub-tabs 1210, and the number of the first sub-tabs 1210 may be equal to the number of turns of the first electrode plate or less than the number of turns of the first electrode plate.

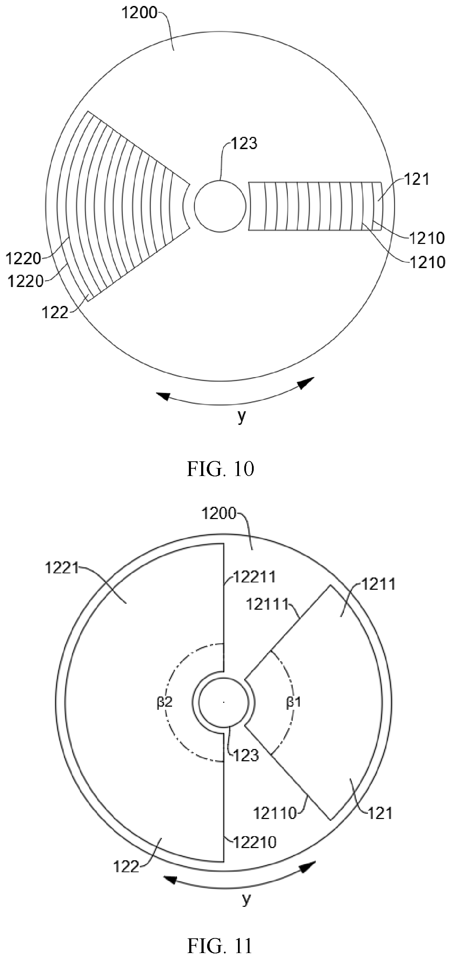

"Each first sub-tab 1210 has the same dimension in the winding direction of the electrode assembly 12" may be understood as that adjacent first sub-tabs 1210 have the same dimension in the winding direction, so that the first tab 121 has a regular shape. For example, the first tab 121 is square, or the first tab 121 is approximately square. Exemplarily, referring to FIG. 10, FIG. 10 is a top view of an electrode assembly 12 according to some other embodiments of the present application. Each first sub-tab 1210 has the same dimension in the winding direction of the electrode assembly 12, and the surface of the first tab 121 is square or approximately square.

"Along a direction from an inner ring to an outer ring of the electrode assembly 12, dimensions of the plurality of first sub-tabs 1210 in the winding direction of the electrode assembly 12 gradually increase" may be understood as that among two adjacent first sub-tabs 1210, the dimension of the first sub-tab 1210 located in the inner ring in the winding direction is smaller than the dimension of the first sub-tab 1210 located in the outer ring. Exemplarily, referring to FIG. 11, FIG. 11 is a top view of an electrode assembly 12 according to some other embodiments of the present application. Along the direction from an inner ring to an outer ring of the electrode assembly 12, the dimensions of the plurality of first sub-tabs 1210 in the winding direction of the electrode assembly 12 gradually increase, and the surface of the first tab 121 is fan-shaped or approximately fan-shaped.

In the above technical solution, in some embodiments, the dimension of each first sub-tab 1210 in the winding direction of the electrode assembly 12 is set to be the same, the processing difficulty (for example, when a tab is die-cut, the die-cutting dimension of each first sub-tab 1210 is the same, so the die-cutting efficiency is high) of the first sub-tab 1210 can be reduced, thereby improving the manufacturing efficiency of the battery 100. In some embodiments, along the direction from the inner ring to the outer ring of the electrode assembly 12, the dimensions of the plurality of first sub-tabs 1210 in the winding direction of the electrode assembly 12 are set to gradually increase, so that the first tab 121 can fully utilize the internal space of the housing 11, providing the first tab 121 with a larger area to improve the current flow capacity between the first tab 121 and the electrode terminal 112, and thus the battery 100 has good charging and discharging performance.

According to some embodiments of the present application, the electrode assembly 12 is a wound electrode assembly 12, the second tab 122 includes a plurality of second sub-tabs 1220, and each second sub-tab 1220 has the same dimension in the winding direction of the electrode assembly 12; or, along the direction from an inner ring to an outer ring of the electrode assembly 12, dimensions of the plurality of second sub-tabs 1220 in the winding direction of the electrode assembly 12 gradually increase.

The electrode assembly 12 is a wound electrode assembly 12, and the electrode assembly 12 includes a first electrode plate and a second electrode plate with opposite polarities and a separator film. The first electrode plate, the second electrode plate, and the separator film are stacked and wound based on a winding axis.

The wound electrode assembly 12 includes multiple turns of the second electrode plate, the second tab 122 includes a plurality of second sub-tabs 1220, and the number of the second sub-tabs 1220 may be equal to the number of turns of the second electrode plate or less than the number of turns of the second electrode plate.

"Each second sub-tab 1220 has the same dimension in the winding direction of the electrode assembly 12" may be understood as that adjacent second sub-tabs 1220 have the same dimension in the winding direction, so that the second tab 122 has a regular shape. For example, the second tab 122 is square, or the second tab 122 is approximately square.

"Along the direction from the inner ring to the outer ring of the electrode assembly 12, the dimensions of the plurality of second sub-tabs 1220 in the winding direction of the electrode assembly 12 gradually increase" may be understood as that among two adjacent second sub-tabs 1220, the dimension of the second sub-tab 1220 located in the inner ring in the winding direction is smaller than the dimension of the second sub-tab 1220 located in the outer ring. Exemplarily, in FIG. 10 and FIG. 11, along the direction from the inner ring to the outer ring of the electrode assembly 12, the dimensions of the plurality of first sub-tabs 1210 in the winding direction of the electrode assembly 12 gradually increase, and the surface of the first tab 121 is fan-shaped or approximately fan-shaped.

In the above technical solution, in some embodiments, the dimension of each second sub-tab 1220 in the winding direction of the electrode assembly 12 is set to be the same, the processing difficulty (for example, when a tab is die-cut, the die-cutting dimension of each second sub-tab 1220 is the same, so the die-cutting efficiency is high) of the second sub-tab 1220 can be reduced, thereby improving the manufacturing efficiency of the battery 100. In some embodiments, along the direction from the inner ring to the outer ring of the electrode assembly 12, the dimensions of the plurality of second sub-tabs 1220 in the winding direction of the electrode assembly 12 are set to gradually increase, so that the second tab 122 can fully utilize the internal space of the housing 11, providing the second tab 122 with a larger area to improve the current flow capacity between the second tab 122 and the housing 11, and thus the battery 100 has good charging and discharging performance.

According to some embodiments of the present application, referring to FIG. 11, FIG. 11 is a top view of an electrode assembly 12 according to some embodiments of the present application. The first tab 121 has a second surface 1211 facing the first wall 110, and the second surface 1211 is fan-shaped.

The second surface 1211 is a surface of the first tab 121 facing the first wall 110. In some embodiments, the second surface 1211 is a surface of the first tab 121 electrically connected to the electrode terminal 112. For example, the second surface 1211 is electrically connected to the electrode terminal 112 through connection with the first adapting member 14.

"The second surface 1211 is fan-shaped" may be understood as that the second surface 1211 extends in an arc-shaped trajectory. For example, the first end surface 1200 is circular, and the second surface 1211 extends along the circumferential direction of the first end surface 1200 to form a fan shape with the center of the first end surface 1200 as the center of the circle.

The center of the fan-shaped second surface 1211 may be located on the central axis of the main body portion 120 or not on the central axis of the main body portion 120. Exemplarily, in FIG. 11, the center of the fan-shaped second surface 1211 is located on the central axis of the main body portion 120.

In the above technical solution, the second surface 1211 of the first tab 121 is set to be a fan-shaped structure, so that the first tab 121 can fully utilize the internal space of the housing 11, providing the first tab 121 with a larger area to improve the current flow capacity between the first tab 121 and the electrode terminal 112, and thus the battery 100 has good charging and discharging performance.

According to some embodiments of the present application, referring to FIG. 11, along the circumferential direction y of the main body portion, the second surface 1211 has a first edge 12110 and a second edge 12111 that are distant from each other, an angle between the first edge 12110 and the second edge 12111 is β1, and 0 < β1 ≤ 270°.

In some embodiments, the arc-shaped trajectory of the second surface 1211 is parallel to the circumferential direction y of the main body portion, and the center corresponding to the second surface 1211 may be located on the central axis of the main body portion 120.

The first edge 12110 and the second edge 12111 are two edges of the second surface 1211 that are distant from each other on its arc-shaped trajectory, and the angle between the first edge 12110 and the second edge 12111 may correspond to the central angle of the fan-shaped second surface 1211.

In some embodiments, the angle β1 between the first edge 12110 and the second edge 12111 is less than or equal to 270°. For example, the angle β1 between the first edge 12110 and the second edge 12111 may be 1°, 2°, ..., 45°, 46°, 47°, ..., 90°, 91°, 92°, ..., 180°, 181°, 182°, ..., 268°, 269°, 270°, or any value between two adjacent values.

In the above technical solution, the angle β1 formed between the first edge 12110 and the second edge 12111 of the first tab 121 is set to be less than or equal to 270 degrees, the central angle of the second surface 1211 of the fan-shaped first tab 121 is less than or equal to 270 degrees, so as to alleviate the phenomenon that the first tab 121 and the second tab 122 are prone to short circuit due to the space occupied by the first tab 121 being too large, and thus the battery 100 has higher reliability.

According to some embodiments of the present application, referring to FIG. 11, the second tab 122 has a third surface 1221 facing the first wall 110, and the third surface 1221 is fan-shaped.

The third surface 1221 is a surface of the second tab 122 facing the first wall 110. In some embodiments, the third surface 1221 is a surface of the second tab 122 electrically connected to the housing 11. For example, the third surface 1221 is electrically connected to the first wall 110 through connection with the second adapting member 15.

"The third surface 1221 is fan-shaped" may be understood as that the third surface 1221 extends in an arc-shaped trajectory. For example, the first end surface 1200 is circular, and the third surface 1221 extends along the circumferential direction of the first end surface 1200 to form a fan shape with the first end surface 1200 as the center of the circle.

The center of the fan-shaped third surface 1221 may be located on the central axis of the main body portion 120 or not on the central axis of the main body portion 120. Exemplarily, in FIG. 11, the center of the fan-shaped third surface 1221 is located on the central axis of the main body portion 120.

In the above technical solution, the third surface 1221 of the second tab 122 is set to be a fan-shaped structure, the second tab 122 can fully utilize the internal space of the housing 11, providing the second tab 122 with a larger area to improve the current flow capacity between the second tab 122 and the housing 11, and thus the battery 100 has good charging and discharging performance.

According to some embodiments of the present application, along the circumferential direction y of the main body portion, the third surface 1221 has a third edge 12210 and a fourth edge 12211 that are distant from each other, an angle between the third edge 12210 and the fourth edge 12211 is β2, and 0 < β2 ≤ 180°.

In some embodiments, the arc-shaped trajectory of the third surface 1221 is parallel to the circumferential direction y of the main body portion, and the center corresponding to the third surface 1221 may be located on the central axis of the main body portion 120.

The third edge 12210 and the fourth edge 12211 are two edges of the third surface 1221 that are distant from each other on its arc-shaped trajectory, and the angle between the third edge 12210 and the fourth edge 12211 may correspond to the central angle of the fan-shaped third surface 1221.

In some embodiments, the angle β2 between the third edge 12210 and the fourth edge 12211 is less than or equal to 180°. For example, the angle β2 between the third edge 12210 and the fourth edge 12211 may be 1°, 2°, ..., 45°, 46°, 47°, ..., 90°, 91°, 92°, ..., 179°, 180°, or any value between two adjacent values.

In the above technical solution, the angle β2 formed between the third edge 12210 and the fourth edge 12211 of the second tab 122 is set to be less than or equal to 180 degrees, so that the central angle of the third surface 1221 of the fan-shaped second tab 122 is less than or equal to 180 degrees, so as to alleviate the phenomenon that the first tab 121 and the second tab 122 are prone to short circuit due to the space occupied by the second tab 122 being too large, and thus the battery 100 has higher reliability.

According to some embodiments of the present application, the electrode assembly 12 includes a first electrode plate and a second electrode plate, and the electrode assembly 12 is a wound electrode assembly 12. The first electrode plate includes a plurality of first sub-tabs 1210, the plurality of first sub-tabs 1210 form the first tab 121, and the innermost n1 turns of the first electrode plate are not provided with the first sub-tabs 1210, where n1 ≥ 1; and/or, the second electrode plate includes a plurality of second sub-tabs 1220, the plurality of second sub-tabs 1220 form the second tab 122, and the innermost n2 turns of the second electrode plate are not provided with the second sub-tabs 1220, where n2 ≥ 1.

The electrode assembly 12 is a wound electrode assembly, and the electrode assembly 12 includes a first electrode plate and a second electrode plate with opposite polarities, and a separator film. The first electrode plate, the second electrode plate, and the separator film are stacked and wound based on a winding axis, and a central through hole 123 penetrating the main body portion 120 is formed at the center of the main body portion 120.

In some embodiments, the wound electrode assembly 12 includes multiple turns of the first electrode plates, the first tab 121 includes a plurality of first sub-tabs 1210, and the number of the first sub-tabs 1210 may be less than the number of turns of the first electrode plates. For example, the innermost n1 turns of the first electrode plates are not provided with the first sub-tabs 1210, such as the innermost first turn and second turn of the first electrode plates are not provided with the first sub-tabs 1210, so that a certain distance is provided between the first tab 121 and the central through hole 123. The value of n1 may be 1 or an integer greater than 1. For example, the innermost one turn, innermost two turns, innermost three turns, innermost four turns, or innermost more turns of the first electrode plates are not provided with the first sub-tabs 1210. Referring to FIG. 11, a certain distance is provided between the edge of the first tab 121 closest to the central through hole 123 and the central through hole 123.

In some embodiments, the wound electrode assembly 12 includes multiple turns of the second electrode plates, the second tab 122 includes a plurality of second sub-tabs 1220, and the number of the second sub-tabs 1220 may be less than the number of turns of the second electrode plates. For example, the innermost n2 turns of the second electrode plates are not provided with the second sub-tabs 1220, such as the innermost first turn and second turn of the second electrode plates are not provided with the second sub-tabs 1220, so that a certain distance is provided between the second tab 122 and the central through hole 123. The value of n2 may be 1 or an integer greater than 1. For example, the innermost one turn, innermost two turns, innermost three turns, innermost four turns, or innermost more turns of the second electrode plates are not provided with the second sub-tabs 1220. Referring to FIG. 11, a certain distance is provided between the edge of the second tab 122 closest to the central through hole 123 and the central through hole 123.

In the above technical solution, the first sub-tab 1210 is not provided on the innermost n1 turns of the first electrode plates, the first tab 121 and the second tab 122 can be effectively spaced apart, thereby mitigating the risk of short circuit between the first tab 121 and the second tab 122, which is conducive to improving the reliability of the battery 100. Similarly, the second sub-tab 1220 is not provided on the innermost n2 turns of the second electrode plates, the second tab 122 and the first tab 121 can be effectively spaced apart, thereby mitigating the risk of short circuit between the second tab 122 and the first tab 121, which is conducive to improving the reliability of the battery 100.

According to some embodiments of the present application, the electrode assembly 12 includes a first electrode plate and a second electrode plate, and the electrode assembly 12 is a wound electrode assembly 12. The first electrode plate includes a plurality of first sub-tabs 1210, the plurality of first sub-tabs 1210 form the first tab 121, and the outermost m1 turns of the first electrode plates are not provided with the first sub-tabs 1210, where m1 ≥ 1; and/or, the second electrode plate includes a plurality of second sub-tabs 1220, the plurality of second sub-tabs 1220 form the second tab 122, and the outermost m2 turns of the second electrode plates are not provided with the second sub-tabs 1220, where m2 ≥ 1.

The electrode assembly 12 is a wound electrode assembly, and the electrode assembly 12 includes a first electrode plate and a second electrode plate with opposite polarities, and a separator film. The first electrode plate, the second electrode plate, and the separator film are stacked and wound based on a winding axis.

In some embodiments, the wound electrode assembly 12 includes multiple turns of the first electrode plates, the first tab 121 includes a plurality of first sub-tabs 1210, and the number of the first sub-tabs 1210 may be less than the number of turns of the first electrode plates. For example, the outermost m1 turns of the first electrode plates are not provided with the first sub-tabs 1210, such as the outermost first turn and second turn of the first electrode plates are not provided with the first sub-tabs 1210, so that a certain distance is provided between the first tab 121 and the outer peripheral surface of the main body portion 120. The value of m1 may be 1 or an integer greater than 1. For example, the outermost one turn, outermost two turns, outermost three turns, outermost four turns, or outermost more turns of the first electrode plates are not provided with the first sub-tabs 1210. Referring to FIG. 11, a certain distance is provided between the edge of the first tab 121 closest to the outer peripheral surface of the main body portion 120 and the outer peripheral surface of the main body portion 120.

In some embodiments, the wound electrode assembly 12 includes multiple turns of the second electrode plates, the second tab 122 includes a plurality of second sub-tabs 1220, and the number of the second sub-tabs 1220 may be less than the number of turns of the second electrode plates. For example, the outermost m2 turns of the second electrode plates are not provided with the second sub-tabs 1220, such as the outermost first turn and second turn of the second electrode plates are not provided with the second sub-tabs 1220, so that a certain distance is provided between the second tab 122 and the outer peripheral surface of the main body portion 120. The value of m2 may be 1 or an integer greater than 1. For example, the outermost one turn, outermost two turns, outermost three turns, outermost four turns, or outermost more turns of the second electrode plates are not provided with the second sub-tabs 1220. Referring to FIG. 11, a certain distance is provided between the edge of the second tab 122 closest to the outer peripheral surface of the main body portion 120 and the outer peripheral surface of the main body portion 120.

In the above technical solution, the first sub-tab 1210 is not provided on the outermost m1 turns of the first electrode plates, the first tab 121 and the second wall 111 can be effectively spaced apart, thereby mitigating the risk of short circuit between the first tab 121 and the second wall 111, which is conducive to improving the reliability of the battery 100. The second sub-tab 1220 is not provided on the outermost m2 turns of the second electrode plates, the second tab 122 and the first wall 110 tab can be effectively spaced apart, thereby mitigating the risk of the second tab 122 being damaged caused by mutual interference between the second tab 122 and the second wall 111 when the electrode assembly 12 is placed into the housing 11, which is conducive to improving the reliability of the battery 100.

According to some embodiments of the present application, the present application further provides a battery 100, and the battery 100 includes the battery cell 10 of any of the above solutions.

Referring to FIG. 2, the battery 100 can further include a box 20, and the battery cell 10 is accommodated in the box 20.

In some embodiments, the box 20 may include a first box body 21 and a second box body 22. The first box body 21 and the second box body 22 fit together to jointly define an assembly space for accommodating the battery cell 10.

Optionally, the second box body 22 may be a hollow structure with one end open, the first box body 21 may be a plate structure, where the first box body 21 covers the open side of the second box body 22, so that the first box body 21 and the second box body 22 jointly define the assembly space. Alternatively, the first box body 21 and the second box body 22 may both be hollow structure with one side open, and the open side of the first box body 21 covers the open side of the second box body 22.

Certainly, the box 20 formed by the first box body 21 and the second box body 22 may be of various shapes, for example, a cylinder and a cuboid. Exemplarily, in FIG. 2, the box 20 is a cuboid structure.

Optionally, one or more battery cells 10 may be provided in the box 20. Exemplarily, in FIG. 2, a plurality of battery cells 10 are provided in the box 20 of the battery 100, and the plurality of battery cells 10 may be connected in series, parallel, or series-parallel, where being connected in series-parallel means that the plurality of battery cells 10 are connected in both series and parallel. The plurality of battery cells 10 may be directly connected in series, parallel, or series-parallel, and then an entirety of the plurality of battery cells 10 is accommodated in the box 20. Certainly, the battery 100 may be formed by a plurality of battery cells 10 being connected in series, parallel, or series-parallel first to form a battery module, and then a plurality of battery modules being connected in series, parallel, or series-parallel to form a whole and are accommodated in the box 20.

The battery 100 can further include other structures. For example, the battery 100 may further include a busbar, and the busbar connects a plurality of battery cells 10 to implement electrical connection between the plurality of battery cells 10.

It should be noted that in some embodiments, the battery 100 may not be provided with the box 20, the battery 100 includes a plurality of battery cells 10, and the battery 100 composed of the plurality of battery cells 10 may be directly assembled to the electric apparatus to supply electrical energy to the electric apparatus through the plurality of battery cells 10. That is, the box 20 may be part of the electric apparatus. Taking the electric apparatus as a vehicle as an example, the box 20 may be used as part of the chassis structure of a vehicle. For example, part of the box 20 may become at least part of the chassis of the vehicle, or part of the box 20 may become at least part of a cross beam and longitudinal beam of the vehicle.

According to some embodiments of the present application, the present application further provides an electric apparatus, the electric apparatus including the battery cell 10 of any of the above solutions, where the battery cell 10 is configured to supply electrical energy to the electric apparatus.

According to some embodiments of the present application, referring to FIG. 4 to FIG. 11, some embodiments of the present application provide a battery cell 10. The battery cell 10 includes a housing 11, an electrode terminal 112, an electrode assembly 12, a first insulating member 13, a first adapting member 14, a second adapting member 15, and a second insulating member 16.

The housing 11 has a first wall 110 and a second wall 111, where the second wall 111 surrounds an edge of the first wall 110. The first end wall may be an end cover of the housing 11, and the second wall 111 may be a housing body of the housing 11 or a peripheral wall of the housing 11. The electrode terminal 112 is mounted on the first wall 110 in an insulating manner. The electrode assembly 12 is accommodated in the housing 11, and the electrode assembly 12 includes a main body portion 120, a first tab 121, and a second tab 122, where the first tab 121 and the second tab 122 have opposite polarities, along a thickness direction x of the first wall, the main body portion 120 has a first end surface 1200 close to the first wall 110, the first tab 121 and the second tab 122 are both provided on the first end surface 1200, the first tab 121 is electrically connected to the electrode terminal 112 through the first adapting member 14, and the second tab 122 is electrically connected to the first wall 110 through the second adapting member 15.

The surfaces of the first tab 121 and the second tab 122 facing the first wall 110 are both fan-shaped to fully utilize the internal space of the cylindrical housing 11.

The second insulating member 16 is provided between the electrode assembly 12 and the first wall 110, and the second insulating member 16 is configured to insulate and isolate the first adapting member 14 from the second adapting member 15, and to insulate and isolate the first adapting member 14 from the second wall 111, and to insulate and isolate the first adapting member 14 from the first wall 110. The first surface 160 of the second insulating member 16 is in contact connection with the first tab 121.

The first insulating member 13 is provided on the outer peripheral surface of the main body portion 120, and a portion of the first insulating member 13 is located between the first tab 121 and the second wall 111 to insulate and isolate the first tab 121 and the second wall 111 from each other. The first insulating member 13 is sheet-shaped, a portion of the first insulating member 13 is connected to the outer periphery of the main body portion 120, and a portion of the first insulating member 13 is connected to the outer periphery of the second insulating member 16, so that a portion of the first insulating member 13 can be stably located between the first tab 121 and the second wall 111 to achieve insulation and isolation between the first tab 121 and the second wall 111.

The first insulating member 13 surrounds the outer periphery of the first tab 121, and the first insulating member 13 does not surround the outer periphery of the second tab 122. Along the circumferential direction y of the main body portion, the central angle α1 corresponding to the first insulating member 13 is greater than the central angle α2 corresponding to the first tab 121.

Along the direction from the main body portion 120 toward the first wall 110, the insulating member extends beyond the first surface 160, and the dimension h1 by which the first insulating member extends beyond the first surface 160 may be greater than or equal to 0.5 mm. In some embodiments, the dimension h1 by which the first insulating member extends beyond the first surface 160 may be greater than or equal to 1.5 mm. Along the direction from the first wall 110 toward the main body portion 120, the first insulating member 13 extends beyond the first end surface 1200, and the dimension h2 by which the first insulating member 13 extends beyond the first end surface 1200 may be greater than or equal to 0.5 mm. In some embodiments, the dimension h2 by which the insulating member extends beyond the first end surface 1200 may be greater than or equal to 1.5 mm.

The foregoing descriptions are merely preferred embodiments of the present application which are not intended to limit the present application. Persons skilled in the art understand that the present application may have various modifications and variations. Any modifications, equivalent replacements, and improvements made without departing from the spirit and principle of the present application shall fall within the protection scope of the present application.

## Claims

1. A battery cell, comprising:
a housing, having a first wall and a second wall, wherein the second wall surrounds an edge of the first wall;
an electrode terminal, mounted on the first wall in an insulating manner;
an electrode assembly, accommodated in the housing, the electrode assembly comprising a main body portion, a first tab, and a second tab, wherein the first tab and the second tab have opposite polarities, along a thickness direction of the first wall, the main body portion has a first end surface close to the first wall, the first tab and the second tab are both provided on the first end surface, the first tab is electrically connected to the electrode terminal, and the second tab is electrically connected to the housing; and
a first insulating member, provided on an outer peripheral surface of the main body portion, wherein a portion of the first insulating member is located between the first tab and the second wall to insulate and isolate the first tab and the second wall from each other.

2. The battery cell according to claim 1, wherein
along a circumferential direction of the main body portion, a central angle corresponding to the first insulating member is α1, and α1 < 360°.

3. The battery cell according to claim 1 or 2, wherein
along the circumferential direction of the main body portion, the central angle corresponding to the first insulating member is α1, and a central angle corresponding to the first tab is α2, satisfying α1 > α2.

4. The battery cell according to any one of claims 1 to 3, wherein
along the circumferential direction of the main body portion, the central angle corresponding to the first insulating member is α1, and a central angle corresponding to the second tab is α3, satisfying α1 + α3 < 360°.

5. The battery cell according to any one of claims 1 to 4, wherein
along the circumferential direction of the main body portion, the first insulating member does not surround the second tab.

6. The battery cell according to any one of claims 1 to 5, wherein the battery cell further comprises:
a first adapting member, the first adapting member connecting the first tab to the electrode terminal; and
a second insulating member, the second insulating member being provided between the first adapting member and the housing to insulate and isolate the first adapting member from the housing.

7. The battery cell according to claim 6, wherein
the first insulating member is connected to the main body portion and the second insulating member.

8. The battery cell according to claim 6 or 7, wherein
along the thickness direction of the first wall, the second insulating member has a first surface facing the electrode assembly, the first surface is connected to the first tab, and along a direction from the main body portion toward the first wall, the first insulating member extends beyond the first surface.

9. The battery cell according to claim 8, wherein
along the direction from the main body portion toward the first wall, a dimension by which the first insulating member extends beyond the first surface is h1, satisfying h1 ≥ 0.5 mm.

10. The battery cell according to claim 9, wherein
h1 ≥ 1.5 mm is satisfied.

11. The battery cell according to any one of claims 1 to 10, wherein
along a direction from the first wall toward the main body portion, the first insulating member extends beyond the first end surface.

12. The battery cell according to claim 11, wherein
along a direction from the first wall toward the main body portion, a dimension by which the first insulating member extends beyond the first end surface is h2, satisfying h2 ≥ 0.5 mm.

13. The battery cell according to claim 12, wherein
h2 ≥ 1.5 mm is satisfied.

14. The battery cell according to any one of claims 1 to 13, wherein
a thickness of the first insulating member is T, satisfying T ≥ 30 µm.

15. The battery cell according to any one of claims 1 to 14, wherein
the electrode assembly is a wound electrode assembly, the first tab comprises a plurality of first sub-tabs, and each of the first sub-tabs has the same dimension in a winding direction of the electrode assembly; or
along a direction from an inner ring to an outer ring of the electrode assembly, dimensions of the plurality of first sub-tabs in the winding direction of the electrode assembly gradually increase.

16. The battery cell according to any one of claims 1 to 15, wherein
the electrode assembly is a wound electrode assembly, the second tab comprises a plurality of second sub-tabs, and each of the second sub-tabs has the same dimension in a winding direction of the electrode assembly; or
along the direction from an inner ring to an outer ring of the electrode assembly, dimensions of the plurality of second sub-tabs in the winding direction of the electrode assembly gradually increase.

17. The battery cell according to any one of claims 1 to 16, wherein
the first tab has a second surface facing the first wall, and the second surface is fan-shaped.

18. The battery cell according to claim 17, wherein
along the circumferential direction of the main body portion, the second surface has a first edge and a second edge that are distant from each other, an angle between the first edge and the second edge is β1, and 0 < β1 ≤ 270°.

19. The battery cell according to any one of claims 1 to 18, wherein
the second tab has a third surface facing the first wall, and the third surface is fan-shaped.

20. The battery cell according to claim 19, wherein
along the circumferential direction of the main body portion, the third surface has a third edge and a fourth edge that are distant from each other, an angle between the third edge and the fourth edge is β2, and 0 < β2 ≤ 180°.

21. The battery cell according to any one of claims 1 to 20, wherein
the electrode assembly comprises a first electrode plate and a second electrode plate, and the electrode assembly is a wound electrode assembly;
the first electrode plate comprises a plurality of first sub-tabs, the plurality of first sub-tabs form the first tab, and the innermost n1 turns of the first electrode plate are not provided with the first sub-tabs, wherein n1 ≥ 1; and/or
the second electrode plate comprises a plurality of second sub-tabs, the plurality of second sub-tabs form the second tab, and the innermost n2 turns of the second electrode plate are not provided with the second sub-tabs, wherein n2 ≥ 1.

22. The battery cell according to any one of claims 1 to 21, wherein
the electrode assembly comprises a first electrode plate and a second electrode plate, and the electrode assembly is a wound electrode assembly;
the first electrode plate comprises a plurality of first sub-tabs, the plurality of first sub-tabs form the first tab, and the outermost m1 turns of the first electrode plate are not provided with the first sub-tabs, wherein m1 ≥ 1; and/or
the second electrode plate comprises a plurality of second sub-tabs, the plurality of second sub-tabs form the second tab, the outermost m2 turns of the second electrode plate are not provided with the second sub-tabs, wherein m2 ≥ 1.

23. A battery, comprising the battery cell according to any one of claims 1 to 22.

24. An electric apparatus, comprising the battery cell according to any one of claims 1 to 22, wherein the battery cell is configured to supply electrical energy.
